(19) Europäisches Patentamt / European Patent Office / Office européen des brevets

(11) **EP 4 376 115 B1**

(12) **EUROPEAN PATENT SPECIFICATION**

(45) Date of publication and mention
of the grant of the patent:
**18.03.2026   Bulletin 2026/12**

(21) Application number: **23212087.3**

(22) Date of filing: **24.11.2023**

(51) International Patent Classification (IPC):
*H01M 4/133* (2010.01)          *H01M 4/136* (2010.01)
*H01M 4/1397* (2010.01)        *H01M 4/62* (2006.01)
*H01M 4/02* (2006.01)           *H01M 4/139* (2010.01)
*H01M 4/38* (2006.01)           *H01M 4/583* (2010.01)
*H01M 10/052* (2010.01)        *H01M 4/36* (2006.01)

(52) Cooperative Patent Classification (CPC):
**H01M 4/133; H01M 4/136; H01M 4/139;**
**H01M 4/1397; H01M 4/366; H01M 4/38;**
**H01M 4/583; H01M 4/625; H01M 10/052;**
H01M 2004/028; Y02E 60/10

(54) **POSITIVE ELECTRODE ACTIVE MATERIAL COMPRISING SULFUR-CARBON COMPOSITE AND LITHIUM-SULFUR SECONDARY BATTERY COMPRISING THE SAME**

POSITIVELEKTRODENAKTIVMATERIAL MIT SCHWEFEL-KOHLENSTOFF-VERBUNDSTOFF UND LITHIUM-SCHWEFEL-SEKUNDÄRBATTERIE DAMIT

MATÉRIAU ACTIF D'ÉLECTRODE POSITIVE COMPRENANT UN COMPOSITE SOUFRE-CARBONE ET BATTERIE SECONDAIRE LITHIUM-SOUFRE LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.11.2022   KR 20220159965**
**23.12.2022   KR 20220183771**
**23.12.2022   KR 20220183586**
**27.12.2022   KR 20220185613**
**16.05.2023   KR 20230063394**
**31.05.2023   KR 20230070299**
**07.06.2023   KR 20230073163**
**13.06.2023   KR 20230075765**
**08.09.2023   KR 20230119938**
**08.09.2023   US 202318244083**
**08.09.2023   EP 23196130**

(43) Date of publication of application:
**29.05.2024   Bulletin 2024/22**

(60) Divisional application:
**25159869.4 / 4 535 482**

(73) Proprietor: **LG ENERGY SOLUTION, LTD.**
**Seoul 07335 (KR)**

(72) Inventors:
• **KIM, Min-Su**
**34122 Daejeon (KR)**
• **KANG, Da-Young**
**34122 Daejeon (KR)**
• **KIM, Bong-Soo**
**34122 Daejeon (KR)**
• **YANG, Seung-Bo**
**34122 Daejeon (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A2- 3 667 779      KR-A- 20200 050 583**

• **DING NING ET AL: "Key parameters in design of lithium sulfur batteries", JOURNAL OF POWER SOURCES, ELSEVIER, AMSTERDAM, NL, vol. 269, 9 July 2014 (2014-07-09), pages 111 - 116, XP029043909, ISSN: 0378-7753, DOI: 10.1016/ J.JPOWSOUR.2014.07.008**

**Description**

CROSS-REFERENCE TO RELATED APPLICATIONS

This application claims the benefit of and priority to based on Korean Patent Application No. 10-2022-0159965, filed on November 25, 2022, Korean Patent Application No. 10-2022-0183586 and No. 10-2022-0183771, filed on December 23, 2022, Korean Patent Application No. 10-2022-0185613, filed on December 27, 2022, Korean Patent Application No. 10-2023-0063394, filed on May 16, 2023, Korean Patent Application No. 10-2023-0070299, filed on May 31, 2023, Korean Patent Application No. 10-2023-0073163, filed on June 7, 2023, Korean Patent Application No. 10-2023-0075765, filed on June 13, 2023, and European Patent Application EP23196130, Korean Patent Application KR 10-2023-0119938 and United States Patent Application US 18/244,083 filed September 8, 2023.

TECHNICAL FIELD

The present disclosure relates to a positive electrode active material comprising a sulfur-based material, a positive electrode comprising the same, and a lithium-sulfur secondary battery with high energy density and improved output characteristics, comprising the positive electrode active material.

BACKGROUND OF THE ART

A lithium-sulfur battery is a battery system using a sulfur-based material having a sulfur-sulfur (S-S) bond for a positive electrode active material and a lithium metal for a negative electrode active material. Sulfur, the main component of the positive electrode active material, is abundant in nature and can be found around the world, is non-toxic and has low atomic weight.

As secondary batteries are used in a wide range of applications including electric vehicles (EVs) and energy storage systems (ESSs), attention is drawn to lithium-sulfur batteries theoretically having higher energy storage density by weight (~2,600 Wh/kg) than lithium-ion secondary batteries having lower energy storage density by weight (~250 Wh/kg).

During discharging, lithium-sulfur batteries undergo oxidation at the negative electrode active material, lithium, by releasing electrons into lithium cation, and reduction at the positive electrode active material, the sulfur-based material, by accepting electrons. Through the reduction reaction, the sulfur-based material is converted to sulfur anion by the S-S bond accepting two electrons. The lithium cation produced by the oxidation reaction of lithium migrates to the positive electrode via an electrolyte, and bonds with the sulfur anion produced by the reduction reaction of the sulfur-based compound to form a salt. Specifically, sulfur before the discharge has a cyclic $S_8$ structure, and it is converted to lithium polysulfide ($Li_2S_x$, x = 8, 6, 4 or 2) by the reduction reaction and is completely reduced to lithium sulfide ($Li_2S$).

Since sulfur used in the positive electrode active material is non-conductive, to improve the reactivity of sulfur, studies have been made on porous carbon materials as sulfur hosts. To improve the dynamic activity of electrochemical reaction during charging/discharging of lithium-sulfur secondary batteries, there is a continuous need for the technology development for sulfur-carbon composites in which the positive electrode active material is loaded onto the porous carbon materials as positive electrode materials.

In particular, when sulfur is loaded onto the porous carbon materials theoretically having large specific surface area, high sulfur content improves the energy density and life characteristics of the batteries. However, experimentally, when sulfur is loaded using the porous carbon materials having large specific surface area, it results in non-uniform battery capacity, low tap density when forming the electrode and low compaction ratio during rolling, causing swelling in the electrodes, thereby making it difficult to manufacture and commercialize the electrodes.

In these circumstances, efforts are being made to study and develop sulfur-carbon composites of various properties for use in lithium-sulfur secondary batteries.

EP 3 667 779 A2 discloses a sulfur-carbon composite including porous carbon material, and sulfur, wherein at least a portion of an inside and a surface of the porous carbon material coated with the sulfur, the sulfur-carbon composite has a pore volume of 0.180 $cm^3$/g to 0.300 $cm^3$/g, and the sulfur-carbon composite has an average pore size of 40.0 nm to 70.0 nm, and a method of manufacturing the same. Also, a method of manufacturing a sulfur-carbon composite, which includes (a) mixing a porous carbon material with sulfur particles, wherein the sulfur particles have a particle size of 1 nm to 1 $\mu$m using a Henschel mixer; and (b) drying the resulting mixture of (a).

KR 2020 0050583 A discloses a method for manufacturing a sulfur-carbon composite to control the particle size of the sulfur-carbon composite to a specific range. To this end, the method comprises: a step (a) of mixing sulfur with a porous carbon material; a step (b) of heat-treating the mixture; and a step (c) of preparing slurry and then mixing the same via a ball milling process.

Ning et al., Journal of Power Sources, 2014, 269 (9), 111-116, discusses key parameters in design of lithium sulfur batteries.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

## SUMMARY OF THE INVENTION

Technical Problem

The present invention aims to overcome drawbacks of the prior art, especially is designed to solve the above-described problem, and therefore the present disclosure is directed to providing an active material comprising a porous carbon material having a small particle size as a sulfur host for uniform electrochemical reactivity of sulfur, and an electrode and a battery using the same.

Specifically, the present disclosure is directed to providing a lithium-sulfur battery with improved energy density, capacity and electrochemical reaction uniformity of the battery by reducing the particle size of the porous carbon material used as a sulfur host and adjusting a particle size distribution to a predetermined ratio, according to the claims.

Technical Solution

The above problem is solved in accordance with the subject matter of the independent claims. Further embodiments result from the sub-claims and the following written description.

To solve the above-described problem, the present disclosure according to an aspect provides a positive electrode active material for a lithium-sulfur battery of the following embodiments.

A positive electrode active material according to a first embodiment, for a lithium-sulfur battery, comprises:

a sulfur-carbon composite,
wherein

- the sulfur-carbon composite comprises a porous carbon material and a sulfur-based material,
- the sulfur-based material is located on at least a part of the surface of the porous carbon material,

wherein the sulfur-based material comprises at least one of sulfur ($S_8$) or a sulfur compound,
wherein the porous carbon material has a broadness factor (BF) of 1 to 6, wherein the broadness factor is the ratio the particle size $D_{90}$ to the particle size $D_{10}$ of the porous carbon material determined as set forth herein; and
a sum of particle size $D_{10}$ and particle size $D_{90}$ of the porous carbon material determined as set forth herein is 50 $\mu$m or more and 60 $\mu$m or less.

According to a second embodiment, in the first embodiment, the sulfur-based material comprises at least one selected from the group consisting of a disulfide compound, preferably at least one selected from the group consisting of inorganic sulfur ($S_8$), $Li_2S_n$ ($n \geq 1$); an organic sulfur compound, especially 2,5-dimercapto-1,3,4-thiadiazole or 1,3,5-trithiocyanuic acid; and a carbon-sulfur polymer (($C_2S_x)_n$, x=2.5 to 50, n$\geq$2).

According to a third embodiment, in any one of the first to second embodiments, the porous carbon material may comprise at least one selected from the group consisting of activated carbon, carbon black, carbon nanotubes and graphene, preferably carbon nanotubes.

According to a fourth embodiment, in any one of the first to third embodiments, an amount of the sulfur (S) may be 60 wt% or more and 90 wt% or less based on 100 wt% of the sulfur-carbon composite.

According to a fifth embodiment, in any one of the first to fourth embodiments, the porous carbon material has a $D_{50}$ particle size determined as set forth in the description from 20 $\mu$m or more and 40 $\mu$m or less.

According to a sixth embodiment, in any one of the first to fifth embodiments, the sulfur-carbon composite is obtainable by mixing the porous carbon material and the sulfur-based material and subsequentially heating the mixed porous carbon material and sulfur-based material at a temperature of 120°C or more.

According to another aspect of the present disclosure, there is provided a positive electrode of the following embodiments.

The positive electrode according to a seventh embodiment comprises a current collector and a positive electrode active material layer on at least one surface of the current collector, wherein the positive electrode active material layer comprises the positive electrode active material for the lithium-sulfur battery according to any one of the first to sixth embodiments, and an amount of the sulfur (S) is 60 wt% or more and 90 wt% or less based on 100 wt% of the positive electrode active material layer.

According to an eighth embodiment, in any one of the tenth to seventh embodiments, an average tortuosity value of the positive electrode active material layer determined as set forth below is 1.7 or less.

According to still another aspect of the present disclosure, there is provided a lithium-sulfur battery of the following embodiments.

The lithium-sulfur battery according to a ninth embodiment comprises an electrode assembly comprising a positive electrode, a negative electrode and a separator interposed between the positive electrode and the negative electrode; and an electrolyte, wherein the positive electrode comprises the positive electrode active material according to any one of the first to sixth embodiments.

According to a tenth embodiment, in the ninth embodiment, a ratio (El/S) of the total weight of the electrolyte to the total weight of the sulfur (S) in the electrode assembly may be 3.5 g/g or less.

Advantageous Effects

In case that carbon materials have large particle size, the pores in the carbon materials are bigger than necessary, so the cell capacity may be low.

Additionally, in case that carbon materials have wide particle size distribution, the cell capacity may be low due to non-uniform reaction of sulfur-based materials loaded onto the carbon materials of non-uniform size.

According to the present disclosure, since the porous carbon material having small and uniform particle size distribution is used as a host for the sulfur-based material to increase the uniformity of reaction. Therefore, it may be possible to achieve a high cell capacity compared to a cell capacity achieved using carbon materials having large or non-uniform particle size.

BRIEF DESCRIPTION OF FIGURES

FIG. 1 is a graph showing the measurement results of the particle size distribution of Comparative Example 1 and Examples 1 to 3, wherein Examples 2 and 3 are not in accordance with the invention.

FIG. 2 presents SEM images of a porous carbon material used in the manufacture of the sulfur-carbon composite of Example 4 (not in accordance with the invention) with 1000x magnification (left) and 10,000x magnification (right).

FIG. 3 presents SEM images of a porous carbon material used in the manufacture of the sulfur-carbon composite of Comparative Example 2 with 1000x magnification (left) and 10,000x magnification (right).

FIG. 4 is a top-view SEM image at 400x magnification of a positive electrode manufactured using the sulfur-carbon composite of Comparative Example 1.

FIG. 5 is a top-view SEM image at 400x magnification of the positive electrode manufactured using the sulfur-carbon composite of Example 1.

FIG. 6A presents SEM images of a vertical cross section of a positive electrode manufactured using the sulfur-carbon composite of Comparative Example 2 with 1000x magnification (left) and 5,000x magnification (right).

FIG. 6B is an image showing a measuring process of average tortuosity values of the positive electrode active material layer using the image on the left side of FIG. 6A.

FIG. 7A presents SEM images of a vertical cross section of a positive electrode manufactured using the sulfur-carbon composite of Example 4 (not according to the present invention) with 1000x magnification (left) and 5,000x magnification (right).

FIG. 7B is an image showing a measuring process of average tortuosity values of the positive electrode active material layer using the image on the left side of FIG. 7A.

Figure 8 is a graph showing the evaluation results of changes in discharge capacity according to repeated charging/discharging cycles of Comparative Example 1 and Examples 1 to 3, wherein Examples 2 and 3 are not in accordance with the invention.

Figure 9 is a graph showing comparative evaluation results of relative capacities of Comparative Example 1 and Examples 1 to 3, wherein Examples 2 and 3 are not in accordance with the invention.

Figure 10 is a graph of comparative evaluation results of relative nominal voltages of Comparative Example 1 and Examples 1 to 3, wherein Examples 2 and 3 are not in accordance with the invention.

Figure 11 is a graph showing evaluation results of a 0.5 C discharge capacity of the batteries using the sulfur-carbon composites of Example 1 and Comparative Example 1.

Figure 12 is a graph showing evaluation results of a 0.5 C discharge capacity of the batteries using the sulfur-carbon composites of Example 4 (not according to the invention) and Comparative Example 2.

Figure 13a is a top-view SEM image at 400x magnification of the positive electrode manufactured using the sulfur-carbon composite of Example 1 indicating the length of the 5 biggest particles.

Figure 13b is a top-view SEM image at 1000x magnification of the positive electrode manufactured using the sulfur-carbon composite of Example 1 indicating the length of the 5 smallest particles.

Figure 14a is a top-view SEM image at 400x magnification of the positive electrode manufactured using the sulfur-carbon composite of Comparative Example 1 indicating the length of the 5 biggest particles.

Figure 14b is a top-view SEM image at 1000x magnification of the positive electrode manufactured using the sulfur-carbon composite of Comparative Example 1 indicating the length of the 5 smallest particles.

Figure 15a is a top-view SEM image at 400x magnification of the positive electrode manufactured using the sulfur-carbon composite of Comparative Example 1 after usage indicating the length of the 5 biggest particles.

Figure 15b is a top-view SEM image at 1000x magnification of the positive electrode manufactured using the sulfur-carbon composite of Comparative Example 1 after usage indicating the length of the 5 smallest particles.

Fig. 16a presents a SEM image of a top-view of a positive electrode manufactured using the sulfur-carbon composite of an inventive Example with 400x magnification.

Fig. 16b presents a SEM image of a top-view of a positive electrode manufactured using the sulfur-carbon composite of a Comparative Example with 400x magnification.

## BEST MODE

Hereinafter, the present disclosure will be described in more detail.

It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Unless otherwise restricted, a detailed description defining or specifying the elements may be applied to all inventions, and is not limited to descriptions of particular inventions. That is, the present disclosure also refers to combinations of the embodiments even if they are disclosed separately.

Additionally, unless explicitly stated otherwise, a singular form includes a plural form throughout the detailed description and the appended claims.

The term "comprise" or "include" when used in this specification, specifies the presence of stated elements, but does not preclude the presence or addition of one or more other elements, unless the context clearly indicates otherwise. However, unless explicitly stated otherwise, "comprising" or "including" or the like includes "consisting of".

Additionally, the terms "about" and "substantially" as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

Throughout the specification, "A and/or B" refers to either A or B or both.

In the present disclosure, "specific surface area" is measured by the Brunauer, Emmett and Teller (BET) method, and specifically, it may be calculated from the adsorption amount of nitrogen gas under the liquid nitrogen temperature (77K) using BEL Japan's BELSORP-mino II.

The term "polysulfide" as used herein is the concept that covers "polysulfide ion ($Sx^{2-}$, x = 8, 6, 4, 2))" and "lithium polysulfide ($Li_2S_x$ or $LiS_x^-$, x = 8, 6, 4, 2)".

The term "composite" as used herein refers to a material with physically·chemically different phases and more effective functions, formed by combining two or more materials.

The term "porosity" as used herein refers to a fraction of voids in a structure over the total volume and is indicated in vol%, and may be used interchangeably with void fraction, degree of porosity or the like. The porosity may be measured according to the method of ISO 15901:2019 known in the art.

In the present disclosure, "particle size $D_{10}$" refers to a particle size at 10% of cumulative volume particle size distribution of particles, "particle size $D_{50}$" refers to a particle size at 50% of cumulative volume particle size distribution of particles, and "particle size $D_{90}$" refers to a particle size at 90% of cumulative volume particle size distribution of particles. That is, for example, the average particle size (D50) may be the median diameter or the medium value of the particle size distribution, that is, the value of the particle diameter at 50% in the cumulative distribution. The particle size means the particle diameter. The particle diameter may refer to the longest distance of opposed surfaces of the particle.

Each of the particle size $D_{10}$, $D_{50}$ and $D_{90}$ may be measured using a laser diffraction method. For example, each of the particle size $D_{10}$, $D_{50}$ and $D_{90}$ may be measured by dispersing a target particle powder in a dispersion medium, introducing into a commercially available laser diffraction particle size measurement apparatus (for example, Microtrac MT 3000), irradiating ultrasound of about 28 kHz with an output of 60W to acquire a cumulative volume particle size distribution graph, and determining the particle size corresponding to each of 10%, 50% and 90% of the cumulative volume distribution.

The present disclosure relates to a positive electrode active material for an electrochemical device, a positive electrode comprising the same and a secondary battery comprising the positive electrode. The secondary battery may be a lithium ion secondary battery. In particular, the positive electrode active material according to the present disclosure comprises a sulfur-carbon composite, and the lithium ion secondary battery may be a lithium-sulfur secondary battery.

According to an aspect of the present disclosure, the positive electrode active material comprises the sulfur-carbon composite, and the sulfur-carbon composite comprises a porous carbon material and a sulfur-based material. The sulfur-based material is loaded onto, that is, located on all or at least a part of the surface of the porous carbon material. In this regard, the surface of the porous carbon material encompasses any surface accessible für deposition of the sulfur-based material during preparation of the sulfur-carbon composite, especially encompasses or may be the inner pores and outer surfaces of the porous carbon material.

Specifically, the positive electrode active material according to the present disclosure comprises the sulfur-carbon composite, the sulfur-carbon composite comprises the porous carbon material and the sulfur-based material, and the sulfur-based material is loaded and/or coated on all or at least a portion of the inner pores and outer surfaces of the porous carbon material.

According to the present disclosure, the porous carbon material comprises or is formed of particles, that is, is in a particulate from.

The present disclosure is characterized in that the porous carbon material has a specific range of particle sizes.

In the present disclosure, the porous carbon material is characterized in that the sum of particle size $D_{10}$ and particle size $D_{90}$ is 50 $\mu$m or more and 60 $\mu$m or less.

Furthermore, the present disclosure is characterized in that the porous carbon material has a specific range of particle size distribution which is referred to by means of the broadness factor (BF) which is the ratio the particle size $D_{90}$ to the particle size $D_{10}$ of the porous carbon material.

In accordance with the present invention, the porous carbon material ischaracterized by having a Broadness Factor (BF) of 1 to 6, For example, the porous carbon material may have a ratio of the $D_{90}$ particle size to the $D_{10}$ particle size from larger than 1 and 6 or smaller ($1 < D_{90}/D_{10} \leq 6$), preferably from 3 to 6, more preferably from 4 to 6, most preferred from 5.4 to 5.5, such as about 5.42 or more and 5.49 or less. The broadness factor (BF) refers to a ratio of the particle size distribution of particle size $D_{90}$ to the particle size $D_{10}$ of the porous carbon material. The broadness factor (BF) may be calculated according to the equation of $D_{90}/D_{10}$. The broadness factor of the porous carbon material can be determined for the porous carbon material before the sulfur-based material is applied to the surface thereof, that is, in the raw material state. Likewise, the broadness factor of the porous carbon material can be determined in the final product, that is, the positive electrode active material, the positive electrode, or the lithium-sulfur battery, especially in the lithium-sulfur battery in the state of charge (SOC) from 70 to 100 % (SOC70-100), especially in the state of charge (SOC) of 100 % (SOC100).

For more details, for example, the lithium-sulfur battery in the state of charge (SOC) 70 to 100%, preferably the lithium-sulfur battery in the SOC 100% is disassembled under inert conditions to obtain a positive electrode, and a known extraction is performed from the obtained positive electrode to remove the binder and the sulfur-based material. After extracting and removing the binder and the sulfur-based material, $D_{90}$ and $D_{10}$ of the remaining porous carbon material are measured and then the value of $D_{90} / D_{10}$ can be calculated and measured according to the above-described particle size Dn (n = 10, 50 or 90) measuring method.

The porous carbon material according to the present invention is characterized in that the sum of particle size $D_{10}$ and particle size $D_{90}$ is 50 $\mu$m or more and 60 $\mu$m or less, and the ratio of particle size distribution of the particle size $D_{90}$ to the particle size $D_{10}$ or the BF is 1 to 6. For example, the porous carbon material filtered through the sieve may have a ratio of the $D_{90}$ particle size to the $D_{10}$ particle size from 1 to 6, specifically larger than 1 and 6 or smaller ($1 < D_{90}/D_{10} \leq 6$), preferably from 3 to 6, more preferably from 4 to 6, most preferred from 5.4 to 5.5, such as about 5.49.

In the present disclosure, the porous carbon material has a smaller particle size $D_{10}$ than the particle size $D_{90}$. In this instance, the smaller ratio of particle size distribution of the particle size $D_{90}$ to the particle size $D_{10}$, the more uniform particle size. The present disclosure may comprise the porous carbon material having the BF of 1 to 6 for uniform electrochemical reactivity of the active material, but the mechanism of the present disclosure is not limited thereto.

As described above, in case that the porous carbon material has large particle size or has small particle size but wide particle size distribution, in other words, in case that the porous carbon material has non-uniform particle size, the cell capacity may decrease due to non-uniform reaction of the sulfur-based material loaded onto the porous carbon material. In this circumstance, the present disclosure uses the porous carbon material having small particle size, and more specifically, small particle size and small particle size distribution. That is, the present disclosure is characterized by comprising the porous carbon material having small particle size to improve the cell capacity. Furthermore, the present disclosure may be characterized by comprising the porous carbon material having small particle size and uniform particle size distribution to improve the cell capacity.

The sum of particle size $D_{10}$ and particle size $D_{90}$ of the porous carbon material is 50 $\mu$m or more. In an embodiment of the present disclosure, the sum of particle size $D_{10}$ and particle size $D_{90}$ of the porous carbon material may be, for example, 55 $\mu$m or less, In an embodiment of the present disclosure, the sum of particle size $D_{10}$ and particle size $D_{90}$ of the porous carbon material may be, for example, 50 $\mu$m to 55 $\mu$m. For example, the sum of particle size $D_{10}$ and particle size $D_{90}$ of the porous carbon material may be 50 $\mu$m to 52 $\mu$m, such as about 51 $\mu$m. When the sum of particle size

$D_{10}$ and particle size $D_{90}$ is in the above-described range, the porous carbon material has small particle size, leading to uniform loading of the sulfur-based material per porous carbon material, thereby achieving uniform reactivity of the lithium-sulfur battery using the sulfur-carbon composite formed using the same.

In an embodiment of the present disclosure, the particle size $D_{50}$ of the porous carbon material may have, for example, a value of 100 $\mu$m or less, 70 $\mu$m or less, or 50 $\mu$m or less. The particle size $D_{50}$ of the porous carbon material may be 1 or more, 5 or more, 10 or more, 15 or more, or 20 or more. Specifically, the particle size $D_{50}$ of the porous carbon material may be 1 to 100 $\mu$m, 5 to 90 $\mu$m, 10 to 80 $\mu$m, 15 to 70 $\mu$m, 20 to 60 $\mu$m, 10 to 50 $\mu$m, 15 to 40 $\mu$m, or 20 to 40 $\mu$m. The porous carbon material may have a $D_{50}$ particle size of 15 $\mu$m or more and 38 $\mu$m or less, preferably 20 $\mu$m or more and 35 $\mu$m or less, more preferably 21 $\mu$m or more and 24 $\mu$m or less. When the particle size $D_{50}$ of the porous carbon material is in the above-described range, it may be possible to increase the tap density of the positive electrode using the same, thereby increasing the energy density of the battery, but the present disclosure is not limited thereto. For example, when the particle size of the porous carbon material is large, the battery capacity may decrease due to the large pore size of the particulate carbon material. Accordingly, another feature of the present disclosure lies in the design with small and uniform particle size distribution by controlling the particle size of the porous carbon material within the proper range. When the porous carbon material having small particle size and uniform particle size distribution is used as a host for the sulfur-based material, it may be possible to achieve uniform electrochemical performance and improved battery capacity compared to carbon materials having large particle size and non-uniform particle size distribution. The method for measuring the particle size $D_{50}$ is the same as described above (a laser diffraction method).

In an embodiment of the present disclosure, the porous carbon material may be used by pre-treatment through a pre-treatment process including milling by a centrifugal mill and classifying using a sieve according to the particle size, so that the porous carbon material has the above-described particle size, but the method for manufacturing the porous carbon material of the present disclosure is not limited thereto.

In one embodiment, the porous carbon material is prepared by centrifugal milling, preferably using a centrifugal grinder operated with an linear velocity from 30 to 125 m/s, and sieving, preferably with a sieve having a mesh size 2.8 or more and 4 or less times the target $D_{50}$ particle size of the porous carbon material.

In this regard, the term "milling" refers to a process of comminuting the milled material. In this context, milling can be synonymous to grinding, pulverizing, mincing, crushing etc.

The centrifugal grinder used in the method according to the present invention may have a plurality of teeth, for example, 2 to 20 teeth, 4 to 18 teeth, 6 to 16 teeth, 8 to 14 teeth, 10 to 14 teeth, such as 12 teeth. Each of the plurality of teeth may have a shape of a triangular prism, particularly an equilateral triangular prism, and may be arranged so as to point inwardly. The teeth may be arranged so that, in a top view along a rotation axis of the centrifugal grinder, perpendicular bisectors of the triangular prisms meet in a center of the centrifugal grinder. The teeth may be made of stainless steel, titanium and/or stainless steel with a protective coating. An example of such a centrifugal grinder which can be used as the centrifugal grinder in the method according to the present invention is a centrifugal grinder ZM 200 of Retsch GmbH.

The centrifugally grinding may be performed at 6,000-23,000 rpm for the control of the particle size of the porous carbon material. The centrifugally grinding may be performed at 6,000-18,000 rpm for the control of the particle size of the porous carbon material. Especially, the centrifugally grinding may be performed at 6,000-23,000 rpm, preferably at 6,000 to 18,000 rpm for the control of the particle size of the porous carbon material if a centrifugal grinder as described above, such as ZM 200 of Retsch GmbH, is used.

Grinding of the porous carbon material in may be performed using the centrifugal grinder operated with a linear velocity from 30 to 125 m/s. Grinding of the porous carbon material may be performed using the centrifugal grinder operated with a linear velocity from 30 to 95 m/s. Grinding of the porous carbon material may be performed using the centrifugal grinder operated with a linear velocity from 30 to 125 m/s, preferably 30 to 95 m/s, if a centrifugal grinder as described above, such as ZM 200 of Retsch GmbH, is used.

$$linear\ velocity = \frac{RPM \times circumfence}{60\ s}$$

wherein the circumference is the distance one tooth of the centrifugal binder moves until it returns to the same spot, that is, one complete rotation of the tooth.

The porous carbon material centrifugally milled may be filtered through a sieve.

The sieve may be equipped on the outer rim of the centrifugal grinder. The sieve may have an annular cylindrical shape, wherein the sieve is arranged such as to surround the plurality of teeth. In the top view, a smallest distance between one of the plurality of teeth and the sieve in a radial direction of the centrifugal grinder may be from 0.1 to 5 mm or from 0.5 to 2 mm, such as about 1 mm. The sieve may comprise a mesh having trapezoid shaped holes and/or circular holes.

As the teeth rotate, the porous carbon material is milled and particles of the porous carbon material having reached an appropriate size penetrate through the sieve immediately and do not take further damage (comminution). In this way improved article size control and narrow particle size distribution can be achieved.

Milling and sieving may be performed by a continuous process, that is, at the same time.

The particle size of the porous carbon material may be controlled by controlling the mesh size of the sieve. The mesh size of the sieve may be 2.8-4 times of the target $D_{50}$ particle size of the porous carbon material ($2.8 \leq$ mesh size/target $D_{50} \leq 4$). The target $D_{50}$ particle size is the $D_{50}$ particle size desired by one carrying out the method according to the invention and can be freely chosen within the limits imposed by the used equipment. For example, the target $D_{50}$ particle size may be in the range from 10 $\mu$m to 100 $\mu$m, such as about 20 $\mu$m.

In the present disclosure, the porous carbon material acts as a host to provide skeleton for uniform and stable immobilization of sulfur and increases low electrical conductivity of sulfur for smooth electrochemical reaction. The porous carbon material may comprise a plurality of non-uniform pores on the surface and inside. The surface of the porous carbon material includes any surface accessible for sulfur immobilization notwithstanding whether or not including pore-surfaces on and inside the porous carbon material.

In an embodiment of the present disclosure, the BET specific surface area of the porous carbon material is not limited to a particular range, but may be, for example, 150 m$^2$ or more. Preferably, the BET specific surface area of the porous carbon material may be 100 m$^2$/g or more and 2,500 m$^2$/g or less, 150 m$^2$/g or more and 2,500 m$^2$ or less, 150 m$^2$ or more and 2,000 m$^2$ or less, 150 m$^2$ or more and 1,000 m$^2$ or less, 150 m$^2$ or more and 300 m$^2$ or less, or 170 or more and 200 m$^2$ or less. The large specific surface area of the porous carbon material may lead to high loading of the sulfur-based material, thereby improving the electrochemical performance of the positive electrode and the lithium-sulfur battery using the same, but the present disclosure is not limited thereto. Since the carbon material as a sulfur host has large BET specific surface area and the proper particle size range, the sulfur-carbon composite according to the present disclosure has high sulfur loading, low irreversible capacity and high energy density. That is, the present disclosure may have a structure for improving the availability of sulfur in the electrochemical reaction, but is not limited thereto.

In an embodiment of the present disclosure, the BET specific surface area of the porous carbon material may be, for example, 100 to 400 m$^2$/g, for example, 150 to 350 m$^2$/g, and specifically about 200 m$^2$/g, but is not limited thereto.

The BET specific surface area may be measured by the BET method, and may represent a value measured by the commonly used methods for measuring the BET specific surface area. For example, the BET specific surface area may be a value calculated from the adsorption amount of nitrogen gas under the liquid nitrogen temperature (77K) using BEL Japan's BELSORP-max.

In an embodiment of the present disclosure, the porous carbon material may comprise or consist of any carbon-based material having porous and conductive properties commonly used in the corresponding technical field. For example, the porous carbon material may comprise or consist of at least one selected from the group consisting of graphite; graphene; carbon black including DENKA black, acetylene black, ketjen black, channel black, furnace black, lamp black, thermal black; carbon nanotubes (CNT) including single-walled carbon nanotubes (SWCNT) and multi-walled carbon nanotubes (MWCNT); carbon fibers including graphite nanofibers (GNF), carbon nanofibers (CNF) and activated carbon fibers (ACF); graphite including natural graphite, artificial graphite and expandable graphite; carbon nanoribbon; carbon nanobelt, carbon nanorod and activated carbon.

In an embodiment of the present disclosure, the porous carbon material may comprise or consist of carbon nanotubes. The carbon nanotube is a tube made of carbons connected in hexagonal shape. According to an embodiment of the present disclosure, the carbon nanotubes may be single-walled carbon nanotubes (SWCNT), multi-walled carbon nanotubes (MWCNT) or a combination thereof according to the number of layers of carbon atoms (referred to as 'carbon walls') of which the carbon nanotubes are made. Here, the length of the respective carbon nanotube is not particularly limited.

In an embodiment of the present disclosure, the porous carbon material may comprise or consist of carbon nanotubes, specifically multi-walled carbon nanotubes to improve the sulfur loading, but the present disclosure is not limited thereto.

In another embodiment of the present disclosure, the carbon nanotubes may comprise or consist of two or more carbon nanotubes entangled in close contact with each other by agglomeration between them. Specifically, in an embodiment of the present disclosure, the carbon nanotubes may be provided in the form of a carbon nanotube dispersion in which single strands are dispersed in a dispersion medium, or a secondary structure formed by agglomeration of carbon nanotubes of primary structure.

In this aspect, when the porous carbon material comprises or consists of carbon nanotubes, the carbon nanotubes may comprise or consist of at least one of a bundled secondary structure or an entangled secondary structure.

The bundled secondary structure of the carbon nanotubes refers to an agglomerate of primary structures in the lengthwise direction of carbon nanotubes by bonds between carbons, each primary structure being a single strand of carbon nanotube, and may be referred to as bundled CNT.

In an embodiment of the present disclosure, the carbon nanotubes may comprise or consist of, for example, entangled multi-walled carbon nanotubes.

In an embodiment of the present disclosure, the porous carbon material may comprise or consist of, for example, carbon nanotubes having the BET specific surface area of 100 $m^2/g$ or more and 2,500 $m^2/g$ or less, 150 $m^2/g$ or more and 2,500 $m^2$ or less, 150 $m^2$ or more and 2,000 $m^2$ or less, 150 $m^2$ or more and 1,000 $m^2$ or less, 150 $m^2$ or more and 300 $m^2$ or less, or 170 or more and 200 $m^2$ or less, but is not limited thereto.

In an embodiment of the present disclosure, the graphene may be a carbon layer consisting of carbon, or may be graphene oxide, reduced graphene oxide or a mixture thereof depending on its shape, but the present disclosure is not limited thereto.

Meanwhile, in another embodiment of the present disclosure, the carbon material may be manufactured by carbonization of precursors of various carbon materials.

In the present disclosure, the sulfur-based material may include, without limitation, any material that may provide sulfur ($S_8$) as the active material of the lithium-sulfur battery. For example, the sulfur-based material comprises at least one of sulfur ($S_8$) or a sulfur-containing compound.

In an embodiment of the present disclosure, the sulfur-based material may comprise or consist of at least one selected from the group consisting of a disulfide compound comprising at least one of inorganic sulfur ($S_8$), $Li_2S$, ($n \geq 1$); an organic sulfur compound, preferably 2,5-dimercapto-1,3,4-thiadiazole or 1,3,5-trithiocyanuic acid; and a carbon-sulfur polymer (($C_2S_x)_n$, x=2.5 to 50, n>2). In an embodiment of the present disclosure, the sulfur-based material may be inorganic sulfur ($S_8$).

In an embodiment of the present disclosure, the sulfur-based material may be included in the sulfur-carbon composite by physical adsorption with the porous carbon material, especially at the surface thereof, or chemical bond between sulfur (S) and carbon in the porous carbon material, such as covalent bond, Van der Waals bond, especially chemical bond with the surface thereof.

In an embodiment of the present disclosure, the sulfur-carbon composite preferably comprises the sulfur (S), that is sulfur (S) derived from the sulfur-based material during preparation of the sulfur-carbon composite, in an amount of 60 wt% or more, 70 wt% or more, or 75 wt% or more and 99% or less based on 100 wt% of the sulfur-carbon composite. For example, the sulfur-carbon composite may preferably comprise sulfur (S) in an amount of 60 wt% to 99 wt%, 70 wt% to 99 wt%, 60 wt% to 90 wt%, 75 wt% to 90 wt%, 70 wt% to 85 wt%, 70 wt% to 80 wt%, 70 wt% to 75 wt%, or 75 wt% to 80 wt% based on 100 wt% of the sulfur-carbon composite.

In the sulfur-carbon composite according to the present disclosure, the sulfur-based material may be disposed on the surface of the pores of the porous carbon material, especially at least one of the inner surface or the outer surface of the pores of the porous carbon material, and in this instance, may be present in an area of less than 100% of the entire inner and outer surface of the porous carbon material, preferably 1 to 95%, and more preferably 60 to 90%. When sulfur is present on the surface of the porous carbon material within the above-described range, it may be possible to obtain the maximum effect in terms of electron transport area and electrolyte wetting. Specifically, when sulfur is impregnated onto the surface of the porous carbon material uniformly to a small thickness at the area of the above-described range, it may be possible to increase the electron transport contact area during charging·discharging. In case that sulfur is present in the area corresponding to 100% of the entire surface of the porous carbon material, the porous carbon material is completely covered with sulfur, resulting in poor electrolyte wetting and low contact with the conductive material included in the electrode, thereby failing to accept electrons and participate in reaction.

The sulfur-carbon composite may be formed by simply mixing the sulfur-based material with the carbon material, or coating or loading into a core-shell structure. The coating of the core-shell structure may comprise coating any one of the sulfur-based material and the carbon material on the other material, and for example, covering the carbon material surface with sulfur or vice versa. Additionally, the loading may comprise filling the sulfur-based material in the carbon material, especially the pores of the carbon material. The sulfur-carbon composite may be available in any form that satisfies the above-described content ratio of the sulfur and the carbon material, and the present disclosure is not limited thereto.

Subsequently, there is provided a method for manufacturing the sulfur-carbon composite. The method for manufacturing the sulfur-carbon composite according to the present disclosure is not limited to a particular one and may include any method commonly used in the corresponding technical field, and the sulfur-carbon composite may be manufactured by a composite manufacturing method including (S1) mixing the porous carbon material with the sulfur-based material, and (S2) forming a composite.

The step (S1) of mixing may be performed by a stirrer commonly used in the corresponding technical field to improve the mixing between the sulfur-based material and the porous carbon material. In this instance, the mixing time and speed may be selectively adjusted according to the amounts and conditions of the raw materials.

The step (S2) of forming the composite is not limited to a particular method in the present disclosure and may use any method commonly used in the corresponding technical field. The method commonly used in the corresponding technical field may include, for example, a dry process or a wet process such as such as spray coating. For example, the sulfur and the carbon material may be mixed together, and the mixture may be milled by ball milling and placed in an oven of 120 to 160 °C for 20 minutes to 1 hour to uniformly coat the molten sulfur on the inner and outer surfaces of the first carbon material.

In one embodiment, the sulfur-carbon composite is obtainable by mixing the porous carbon material and the sulfur-based material and subsequentially heating the mixed porous carbon material and sulfur-based material at a temperature of 120 °C or more.

Since the sulfur-carbon composite manufactured through the above-described manufacturing method has large specific surface area, high sulfur loading and improved availability of sulfur, it may be possible to improve the electrochemical reactivity of sulfur and improve the accessibility and contact of the electrolyte solution, thereby improving the capacity and life characteristics of the lithium-sulfur battery.

Another aspect of the present disclosure provides a positive electrode formed using the sulfur-carbon composite.

The positive electrode according to another aspect of the present disclosure comprises a current collector; and a positive electrode active material layer on at least one surface of the current collector, wherein the positive electrode active material layer comprises the sulfur-carbon composite, that is, the sulfur-carbon composite as characterized herein composite comprising the porous carbon material and the sulfur-based material located onto all the surface of the porous carbon material.

Throughout the description of the present invention, the positive electrode active material layer may be characterized by comprising the above-described positive electrode active material.

That is, the positive electrode comprises the sulfur-carbon composite comprising the porous carbon material, of which the sum of particle size $D_{10}$ and particle size $D_{90}$ is 50 $\mu$m or more and 60 $\mu$m or less. The positive electrode comprises the sulfur-carbon composite comprising the porous carbon material, of which the sum of particle size $D_{10}$ and particle size $D_{90}$ is 50 $\mu$m or more and 60 $\mu$m or less, and a ratio of the particle size $D_{90}$ to the particle size $D_{10}$ or Broadness Factor (BF) is 1 to 6.

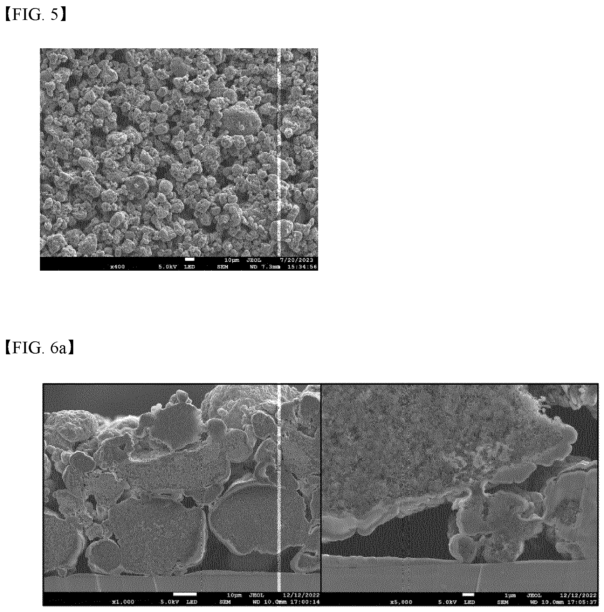

FIG. 5 shows the top view image of the positive electrode according to an embodiment of the present disclosure. Referring to FIG. 5, the underlying the positive electrode active material layer comprising the plurality of sulfur-carbon composites, that is, of the plurality of sulfur-carbon composite particles on one surface of the current collector (not shown) are seen in top view on the positive electrode.

It can be seen that the positive electrode according to an aspect of the present disclosure comprises the plurality of sulfur-carbon composites of uniform area on the positive electrode active material layer in a top view on the positive electrode.

As described above, the positive electrode comprises the positive electrode active material according to an aspect of the present disclosure. That is, the positive electrode comprises the porous carbon material having the Broadness Factor (BF) of 1 to 6 as the sulfur-carbon composite, the BF being a ratio of particle size distribution of particle size $D_{90}$ to particle size $D_{10}$. Accordingly, when the positive electrode active material layer is formed using the sulfur-carbon composite in which the sulfur-based material is loaded onto the porous carbon material of uniform size, it is possible to reduce the difference of area in a top view image of the sulfur-carbon composite of the positive electrode active material layer.

Additionally, in an embodiment of the present disclosure, the particle size $D_{50}$ of the porous carbon material may be, for example, 100 $\mu$m or less.

In one embodiment, the positive electrode may have a loading amount of 2.0 mAh/cm$^2$ or more, preferably 2.0 mAh/cm$^2$ or more and 3.5 mAh/cm$^2$ or less, more preferably 2.0 mAh/cm$^2$ or more and 2.5 mAh/cm$^2$ or less.

In one embodiment, the positive electrode may have a loading amount of 1.67 mg(S)/cm$^2$ or more, preferably 1.67 mg(S)/cm$^2$ or more and 2.92 mg(S)/cm$^2$ or less, more preferably 1.67 mg(S)/cm$^2$ or more and 2.08 mg(S)/cm$^2$ or less. mg(S) is the amount of sulfur.

In one embodiment, the error of the area of arbitrary ten sulfur-carbon composites per area of 50 $\mu$m X 50 $\mu$m in a top-view image of the positive electrode active material layer determined according to SEM may be 100% or less, 90% or less, 80% or less, 70% or less, or 65 % or less.

In an embodiment of the present disclosure, the error of the area of arbitrary ten sulfur-carbon composites per area of 50 $\mu$m X 50 $\mu$m in a top-view image of the positive electrode active material layer determined according to SEM may be, for example, 1% to 100%, 10% to 100%, 30% to 100%, 50% to 90%, 50% to 80%, 50% to 70%, 60% to 70%, or 60 to 65%.

In one embodiment, the sulfur carbon composite contains particles with rounded segments. The rounded segments may at least partly be merged to a botryoidal texture.

In the present disclosure, the 'area' of the sulfur-carbon composite per 'area' in a top-view of the positive electrode active material layer, the 'area' may be measured by the well-known method for measuring the area on the plane in top-view, and the measurement method is not limited to a particular one. For example, in an embodiment of the present disclosure, the area may be measured by a method for measuring the top-view area in the top-view SEM image of the positive electrode active material layer.

In the present disclosure, the area of arbitrary ten sulfur-carbon composites per area of 50 $\mu$m X 50 $\mu$m in a top-view image of the positive electrode active material layer may be measured through top-view SEM image analysis of the positive electrode active material layer. For example, the error of the area of arbitrary ten sulfur-carbon composites per area of 50 $\mu$m X 50 $\mu$m in a top-view image of the positive electrode active material layer may be measured by measuring the area of one sulfur-carbon composite with the largest dimensions thereof, and measuring the mean of arbitrary ten areas and the standard deviation, but its measurement method is not limited thereto.

In one embodiment of the present invention, the area of the sulfur-carbon composite can be measured through the number of pixels occupied by one sulfur-carbon composite on the SEM image, and the average can be measured as an arithmetic mean value.

In one embodiment of the present invention, each area is not particularly limited to the magnification value as long as it is measured on a SEM image of the same magnification. For example, it may be to measure the number of pixels occupied by the sulfur-carbon complex in an SEM image at 400 magnification, or to measure the number of pixels occupied by the sulfur-carbon complex in an SEM image at 1,000 magnification, or to measure the number of pixels occupied by the sulfur-carbon complex in an SEM image at 1,000 magnification, respectively.

In the present disclosure, the 'error' represents a value calculated according to the following Equation 5.

[Equation 5]

$$\text{Error (\%)} = (\text{standard deviation/mean}) \times 100$$

In one embodiment, an average tortuosity value of the positive electrode active material layer is 1.7 or less, preferably 1.6 or less, such as from 1.3 to 1.6.

The tortuosity characterizes the degree of windings of the transport paths in the pores of a porous material.

The average tortuosity value of the positive electrode active material layer in accordance with the present disclosure can be determined as follows.

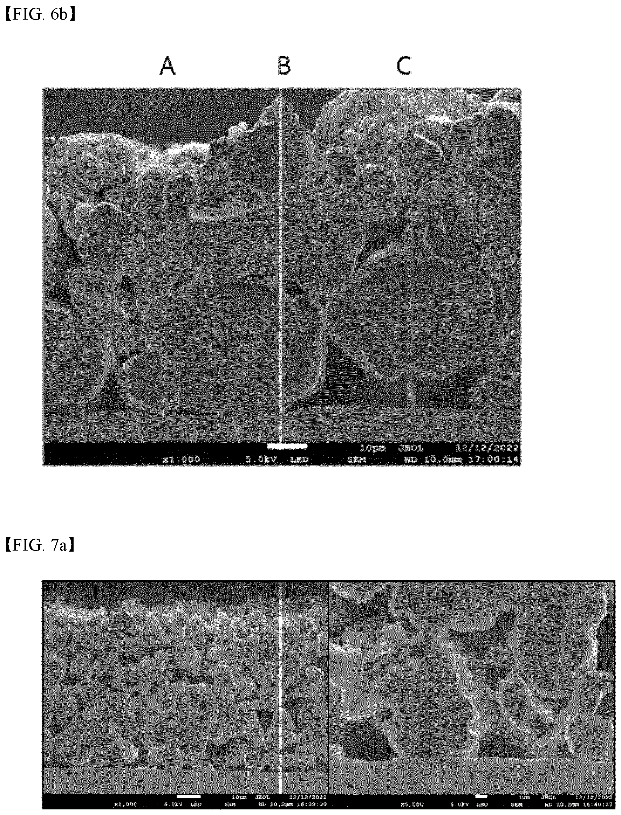

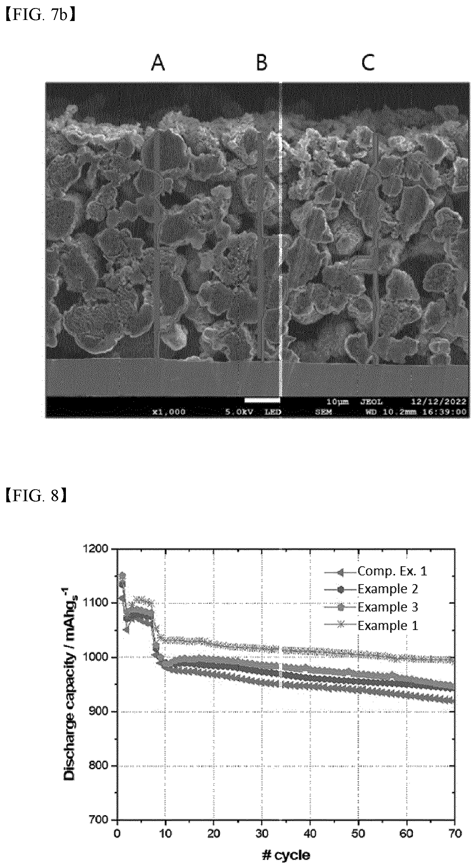

SEM images (model name: SEM, manufacturer: JEOL) of the vertical cross-section of the positive electrodes are acquired under the conditions specified herein in detail. Respective exemplary images are shown in FIGs. 6 and 7 for example 1 and comparative example 1 and the magnification of the SEM images are 1000 times.

For determining the tortuosity value, one point on the surface of the current collector is randomly selected in the cross-section SEM image of the positive electrode. A straight connection perpendicular to the surface of the current collector is made between the randomly selected point and the surface of the positive electrode above this point. The length of the straight connection is determined.

At next, the minimum distance within the pore space between the randomly selected point and the point where the straight connection and the surface of the positive electrode meet is measured, that is, the minimum distance it can be traveled along the surfaces of the particles forming the active layer of the positive electrode.

A tortuosity value is determined according to the following formula:

$$Tortuosity\ value = \frac{minimum\ distance}{length\ of\ straight\ connection}$$

wherein both the minimum distance and the length of the straight connection are given with the same length unit.

The average tortuosity value is determined by determining at least three different tortuosity values at different locations of the positive electrode and calculating an average value thereof.

In the present disclosure, in the positive electrode, when a direction in which the current collector and the positive electrode active material layer are stacked is a 'vertical direction', the cross section of the positive electrode active material layer may refer to both a cross section in the vertical direction of the positive electrode and a cross section in a direction perpendicular to the vertical direction of the positive electrode, and the direction of the cross section is not particularly limited.

A positive electrode according to an embodiment of the present disclosure (not according to the present invention), comprises a current collector and a positive electrode active material layer on at least one surface of the current collector, wherein the positive electrode active material layer comprises a sulfur-carbon composite as a plurality of sulfur-carbon composite particles, wherein the sulfur-carbon composite comprises a porous carbon material and a sulfur-based material, wherein the sulfur-based material is located on at least a part of the surface of the porous carbon material.

the sulfur-carbon composite particles on a surface of the positive electrode may be configured to be in contact with a separator satisfy the following Equation 2A, when a SEM image is obtained:

[Equation 2A]

$$X_L/X_S \leq 15$$

wherein $X_L$ is the average length of the five longest line segments of the five sulfur-carbon composite particles with the biggest surface on the SEM image, and
$X_S$ is the average length of the five longest line segments of the five sulfur-carbon composite particles with the smallest surface on the SEM image.

In a further aspect, the sulfur-carbon composite particles on the surface of the positive electrode are configured to be in contact with a separator satisfy the following Equation 2B, when a SEM image is taken:

[Equation 2B]

$$X_L/X_A \leq 15,$$

wherein $X_L$ is the average length of the five longest line segments of the five sulfur-carbon composite particles with the biggest surface on the SEM image, and
$X_A$ is the average length of all longest line segments of all sulfur-carbon composite particles with a surface on the SEM image.

The positive electrode satisfying the above Equations 2A and/ or 2B may have a small and/or uniform particle size of the sulfur-carbon composite particles included in the positive electrode active material layer. Further, the positive electrode satisfying the above Equations 2A and/ or 2B may have advantageous effects in respect of an uniform reactivity of the lithium-sulfur battery using the same because of a small gap between sulfur-carbon composite particles in the positive electrode active material layer. The sulfur-carbon composite particles may provide a sulfur-carbon composite.
Specifically, according to an embodiment of the present disclosure, a value of $X_L/X_S$ may be, for example, 15 or less, 10 or less, or 5 or less. Additionally, the value of $X_L/X_S$ may be 1 or more, 1.5 or more, 2 or more, 2.5 or more, 3 or more, or 3.5 or more within the upper limit of the range. For example, the value of $X_L/X_S$ may be from 1 to 15, from 1.5 to 10, from 2.0 to 5, from 2.5 to 5.0, from 3.0 to 5.0, from 3.0 to 4.0, or from 3.0 to 4.5. When the value of $X_L/X_S$ is in the above-described range, there may be advantageous effects in respect of having a small gap between sulfur-carbon composite particles in the positive electrode active material layer and an electrochemical reaction uniformity in the positive electrode.
Specifically, according to an embodiment of the present disclosure, a value of $X_L/X_A$ may be, for example, 15 or less, 10 or less, 5 or less, or 2 or less. Additionally, the value of $X_L/X_A$ may be 0.2 or more, 0.5 or more, 0.7 or more, or 0.9 or more within the upper limit of the range. For example, the value of $X_L/X_A$ may be from 0.2 to 15, from 0.5 to 10, from 0.7 to 5, from 0.9 to 2.0, from 1 to 1.5. When the value of $X_L/X_A$ is in the above-described range, there may be advantageous effects in respect of having a small gap between sulfur-carbon composite particles in the positive electrode active material layer and an electrochemical reaction uniformity in the positive electrode.
In the present disclosure, in the positive electrode, when a direction in which the current collector and the positive electrode active material layer are stacked is a 'vertical direction', the cross section of the positive electrode active material layer may refer to both a cross section in the vertical direction of the positive electrode and a cross section in a direction perpendicular to the vertical direction of the positive electrode, and the direction of the cross section is not particularly limited.
In this disclosure, when a stack direction of the current collector and the positive electrode active material layer in the positive electrode is defined as a 'vertical direction', a surface of the positive electrode active material layer that contacts the current collector is referred to as 'a lower surface of the positive electrode active material layer' or 'a bottom surface of the positive electrode active material layer', and a surface opposite the contact surface with the current collector is referred to as 'an upper surface of the positive electrode active material layer' or 'a top surface of the positive electrode'. The surface opposite the contact surface with the current collector may be the surface configured to be in contact with a separator. The separator may be a part of a lithium-sulfur battery and any other conventional lithium-ion battery.
In this disclosure, 'the top view image of the positive electrode active material layer' is an image used to determine the area and the longest line segments (long axis length) of the sulfur-carbon composite particles distributed on the surface configured to be in contact with a separator and inside of the positive electrode active material layer, and may be, for example, an SEM image of the upper surface of the positive electrode active material layer.
According to an embodiment of the present disclosure, the gap between sulfur-carbon composite particles; grains surface; and grain boundaries; of the sulfur-carbon composite may be identified by a brightness difference in the top view image of the positive electrode active material layer.

In this instance, to measure the five longest line segments of the five sulfur-carbon composite particles with the biggest surface on the SEM image, and the five longest line segments of the five sulfur-carbon composite particles with the smallest surface on the SEM image for determining the average length $X_L$, the average length $X_S$, and $X_A$ the top view image of the positive electrode active material layer may analyzed. Preferably, the SEM image for determining the line segments and surfaces may be a top-view image with a 400 times magnification of the surface the positive electrode configured to be in contact with a separator with at least a 200 $\mu$m X 200 $\mu$m size. The SEM image for determining the line segments and surfaces may be a top-view image with a 400 times magnification of an arbitrary surface of the positive electrode configured to be in contact with a separator. The arbitrary surface of the positive electrode configured to be in contact with a separator may have a size of at least a 200 $\mu$m X 200 $\mu$m, like 1000 $\mu$m X 1000 $\mu$m, 500 $\mu$m X 500 $\mu$m, or 200 $\mu$m X 200 $\mu$m. The size of the arbitrary surface of the positive electrode configured to be in contact with a separator may determine the scanned size with an SEM measurement method to obtain the SEM image on the surface of the positive electrode configured to be in contact with a separator.

In an embodiment of the present disclosure, the five sulfur-carbon composite particles with the biggest surface on the SEM image, and the five sulfur-carbon composite particles with the smallest surface on the SEM image may be selected in the entire surface of the positive electrode active material layer. Preferably a partial surface of the positive electrode active material layer may be selected, i.e. an arbitrary surface, and a SEM image is obtained, to determine the five sulfur-carbon composite particles with the biggest surface on the SEM image, and the five sulfur-carbon composite particles with the smallest surface on the SEM image.

For example, the five sulfur-carbon composite particles with the biggest surface on the SEM image, and the five sulfur-carbon composite particles with the smallest surface on the SEM image may be determined from a top-view SEM image with a 400 times magnification of the surface the positive electrode configured to be in contact with a separator with a 200 $\mu$m X 200 $\mu$m size.

In an embodiment of the present disclosure, the sulfur-carbon composite particle surface may be determined by the pixel area occupied by the sulfur-carbon composite particle in the top view image of the positive electrode active material layer. That is, the five sulfur-carbon composite particles with the biggest surface on the SEM image, may refer to sulfur-carbon composite particles having the largest five pixel areas occupied by grains in the top view image of the positive electrode active material layer. Additionally, the five sulfur-carbon composite particles with the smallest surface on the SEM image may refer to sulfur-carbon composite particles having the smallest five pixel area occupied by grains in the top view image of the positive electrode active material layer.

In an embodiment of the present disclosure, the longest line segment in the sulfur-carbon composite particle may refer to the longest straight line in a sulfur-carbon composite particle in the SEM image, which may be preferably a top view image of the positive electrode active material layer.

The longest line segment of the sulfur-carbon composite particle may pass through the center of mass of a sulfur-carbon particle, but when the sulfur-carbon composite is not spherical, oval or elliptical in shape in the SEM image of the positive electrode active material layer, the longest axis may not pass through the center of mass of the sulfur-carbon composite particle. Accordingly, the longest axis in the sulfur-carbon composite particle not limited to a line passing through the center of the sulfur-carbon composite particle.

In an embodiment of the present disclosure, the longest line segment length in the sulfur-carbon composite particle may be determined by the longest distance between pixels at which the longest axis is located in the SEM image of the positive electrode active material layer.

In the above Equations 2A and 2B, $X_L$ is the average value of the longest line segment lengths in the five sulfur-carbon composite particles with the five biggest surfaces, i.e. based on area, in the SEM image which may be a top view image of the positive electrode active material layer, and $X_S$ is the average value of the longest line segment lengths in the five sulfur-carbon composite particles with the five smallest surfaces, i.e. based on the area, in the SEM image which may be a top view image of the positive electrode active material layer. $X_L$ is the average value of the longest line segment lengths in each sulfur-carbon composite particle visible in the SEM image which may be a top view image of the positive electrode active material layer.

In this disclosure, the 'average value' refers to an arithmetic mean. Accordingly, $X_L$ may be measured by measuring the length of the longest line segment of each of the five sulfur-carbon composite particles with the biggest surfaces in the SEM image of the positive electrode active material layer, and calculating an average. Additionally, $X_S$ may be measured by measuring the length of the longest line segment of each of the five sulfur-carbon composite particles with the smallest surfaces in the SEM image of the positive electrode active material layer, and calculating an average.

In an embodiment of the present disclosure, a particle with a length of the longest line segment of less than 1 $\mu$m may appear on the SEM image of the positive electrode active material layer. In this instance, the particle having the longest axis length of less than 1 $\mu$m is not a sulfur-carbon composite in which sulfur is loaded on the surface and/or in the pores, and may represent a porous carbon material that has been broken during the manufacturing process of the positive electrode or impurities. Accordingly, to measure the Xs, in selecting the five sulfur-carbon composite particles with the smallest surface on the SEM image , a particle having the length of the longest line segment of less than 1 $\mu$m may not be selected, and only a sulfur-carbon composite particle having the length of the longest line segment of 1 $\mu$m or more is selected. In an embodiment of the present disclosure, whether or not the positive electrode satisfies Equations 2A and 2B may be measured immediately after the manufacture of the positive electrode or after charge and discharge.

For example, immediately before the manufacture of the positive electrode, the top view image of the positive electrode active material layer may be obtained before activation, and $X_L$, $X_S$ and $X_A$ may be measured by the above-described method in the obtain upper surface view to determine whether or not Equations 2A or 2B are satisfied.

Additionally, the lithium-sulfur battery assembled using the positive electrode may be disassembled to obtain the positive electrode, and $X_L$, $X_S$ and $X_A$ may be measured by the above-described method in the top view image of the positive electrode active material layer of the obtained positive electrode to determine whether or not Equations 2A or 2B are satisfied.

Specifically, when disassembling the lithium-sulfur battery to determine whether or not Equations 2A or 2B are satisfied, the lithium-sulfur battery may be disassembled in a charged state. Specifically, the lithium-sulfur battery in a charged state may be disassembled under an inert atmosphere to obtain the positive electrode, followed by extraction of an electrolyte impregnated in the obtained positive electrode using a proper solvent, washing and drying, and then the top view image of the positive electrode active material layer may be obtained, and determination may be made as to whether or not Equations 2A or 2B are satisfied.

In an embodiment of the present disclosure, the state of charge of the lithium-sulfur battery may be, for example, SOC 50% to 90%, and specifically SOC 60% to 80%, but the present disclosure is not limited thereto. Additionally, the inert atmosphere may be, for example, an Ar atmosphere, but the present disclosure is not limited thereto.

In an embodiment of the present disclosure, the lithium-sulfur battery may suffer separation of the active material from the positive electrode active material layer by the external pressure due to the repeated charge and discharge, or deformation of the positive electrode by the repeated expansion and shrink of the positive electrode active material. Accordingly, when the positive electrode is obtained by disassembling the lithium-sulfur battery, it may be preferable to determine whether or not Equations 2A or 2B are satisfied from the lithium-sulfur battery having the capacity retention of 80% or more compared to the initial capacity (capacity immediately after the manufacture).

Furthermore, a positive electrode for a lithium-sulfur battery, comprising:

a current collector; and
a positive electrode active material layer on at least one surface of the current collector,
wherein the positive electrode active material layer comprises a sulfur-carbon composite as a plurality of sulfur-carbon composite particles,
wherein the sulfur-carbon composite comprises a porous carbon material and a sulfur-based material,
wherein the sulfur-based material is located on at least a part of the surface of the porous carbon material,

and

wherein an arbitrary surface of the positive electrode active material layer configured to be in contact to a separator has an average tortuosity value ($T_{Avg}$) of 1 to 1.7,
wherein the tortuosity value is calculated according to the following formula 1:

[Formula 1]

$$T_{Avg} = \frac{T_X + T_Y}{2} = \frac{\frac{D_X}{L_X} + \frac{D_Y}{L_Y}}{2},$$

$L_X$ is a line segment with a length of 200 $\mu$m from position $X_1$ to position $X_2$,
$L_Y$ is a line segment with a length of 200 $\mu$m from position $Y_1$ to position $Y_2$, wherein $L_Y$ is perpendicular to $L_X$ and the line segments $L_X$ and $L_Y$ half each other,
$D_X$ is the shortest line between the positive electrode active material particles from $X_1$ to $X_2$,
$D_Y$ is the shortest line between the positive electrode active material particles from $Y_1$ to $Y_2$, $T_X$ is the tortuosity value from $X_1$ to $X_2$,
$T_Y$ is the tortuosity value from $Y_1$ to $Y_2$, and
$T_{Avg}$ is the average tortuosity value of $T_X$ and $T_Y$.

In one embodiment, an average tortuosity value of the positive electrode active material layer in top-view of the positive electrode is 1.7 or less, preferably 1.6 or less, such as from 1.3 to 1.6.

The tortuosity characterizes the degree of windings of the transport paths in the pores of a porous material.

The average tortuosity value of the positive electrode active material layer in accordance with the present disclosure can be determined as follows.

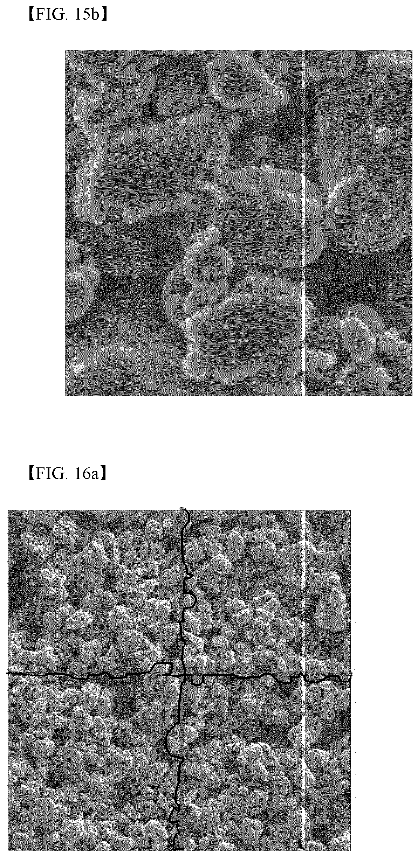

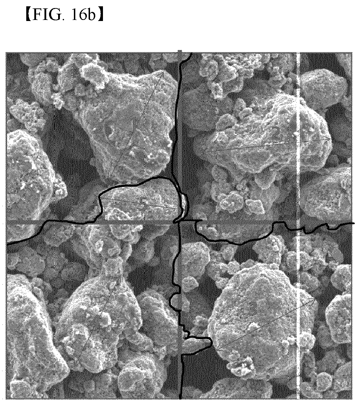

SEM images (model name: SEM, manufacturer: JEOL) of the top view of the positive electrodes are acquired under the conditions specified herein in detail. Respective exemplary images are shown in FIG. 16A for example 1 and FIG 16B for comparative example 1 with a magnification of the SEM image of 400 times, but the SEM images may have other magnification as defined below. The SEM images may have a size of 200 $\mu$m X 200 $\mu$m, but the SEM images may have other sizes as defined below.

For determining the tortuosity value, one point $X_1$ on the surface of the current collector is randomly selected in the top-view SEM image of the positive electrode. A line segment $L_X$ with a length of 200 $\mu$m from position $X_1$ to position $X_2$ is drawn on the top-view SEM image of the positive electrode. Then a line segment $L_Y$ with a length of 200 $\mu$m from position $Y_1$ to position $Y_2$, which is perpendicular to $L_X$ and with the condition that the line segments $L_X$ and $L_Y$ half each other, is drawn on the top-view SEM image of the positive electrode. Thus, $L_X$ and Ly may form a cross.

At next, the shortest line between the positive electrode active material particles from $X_1$ to $X_2$ on the top-view SEM image of the positive electrode is measured to determine $D_X$. Then, the shortest line between the positive electrode active material particles from $Y_1$ to $Y_2$ on the top-view SEM image of the positive electrode is measured to determine $D_Y$.

Thus, $D_X$ and $D_Y$, respectively, reflect the minimum distance along the surfaces of the particles forming the active layer of the positive electrode.

The average tortuosity value of the top-view SEM image may be determined according to the following formula 1:

[Formula 1]

$$T_{Avg} = \frac{T_X + T_Y}{2} = \frac{\frac{D_X}{L_X} + \frac{D_Y}{L_Y}}{2} \ ,$$

$L_X$ is a line segment with a length of 200 $\mu$m from position $X_1$ to position $X_2$,
$L_Y$ is a line segment with a length of 200 $\mu$m from position $Y_1$ to position $Y_2$, wherein $L_Y$ is perpendicular to $L_X$ and the line segments $L_X$ and $L_Y$ half each other,
$D_X$ is the shortest line between the positive electrode active material particles from $X_1$ to $X_2$,
$D_Y$ is the shortest line between the positive electrode active material particles from $Y_1$ to $Y_2$,
$T_X$ is the tortuosity value from $X_1$ to $X_2$,
Ty is the tortuosity value from $Y_1$ to $Y_2$, and
$T_{Avg}$ is the average tortuosity value of $T_X$ and $T_Y$.

The SEM image of the top-view of the positive electrode may fulfill the same requirements as for determining $X_L$, $X_S$ and $X_A$.

More specifically, a positive electrode (not according to the present invention) comprises a current collector and a positive electrode active material layer on at least one surface of the current collector,

wherein the positive electrode active material layer comprises a sulfur-carbon composite as a plurality of sulfur-carbon composite particles, wherein the sulfur-carbon composite comprises a porous carbon material and a sulfur-based material, wherein the sulfur-based material is located on at least a part of the surface of the porous carbon material, wherein the sulfur-carbon composite particles on a surface of the positive electrode are configured to be in contact with a separator satisfy the following Equation 2A, when a SEM image is obtained:

[Equation 2A]

$$X_L/X_S \leq 15$$

wherein $X_L$ is the average length of the five longest line segments of the five sulfur-carbon composite particles with the biggest surface on the SEM image, and
$X_S$ is the average length of the five longest line segments of the five sulfur-carbon composite particles with the smallest surface on the SEM image;

and/ or

wherein the sulfur-carbon composite particles on the surface of the positive electrode are configured to be in contact with a separator satisfy the following Equation 2B, when a SEM image is taken:

$$[Equation\ 2B]$$

$$X_L/X_A \leq 15,$$

wherein $X_L$ is the average length of the five longest line segments of the five sulfur-carbon composite particles with the biggest surface on the SEM image, and
$X_A$ is the average length of all longest line segments of all sulfur-carbon composite particles with a surface on the SEM image;
and / or
wherein an arbitrary surface of the positive electrode active material layer configured to be in contact to a separator has an average tortuosity value ($T_{Avg}$) of 1 to 1.7,

wherein the tortuosity value is calculated according to the following formula 1:

$$[Formula\ 1]$$

$$T_{Avg} = \frac{T_X + T_Y}{2} = \frac{\frac{D_X}{L_X} + \frac{D_Y}{L_Y}}{2} \ ,$$

$L_X$ is a line segment with a length of 200 $\mu$m from position $X_1$ to position $X_2$,
$L_Y$ is a line segment with a length of 200 $\mu$m from position $Y_1$ to position $Y_2$, wherein $L_Y$ is perpendicular to $L_X$ and the line segments $L_X$ and $L_Y$ half each other,
$D_X$ is the shortest line between the positive electrode active material particles from $X_1$ to $X_2$,
$D_Y$ is the shortest line between the positive electrode active material particles from $Y_1$ to $Y_2$,
$T_X$ is the tortuosity value from $X_1$ to $X_2$,
$T_Y$ is the tortuosity value from $Y_1$ to $Y_2$, and
$T_{Avg}$ is the average tortuosity value of $T_X$ and $T_Y$.

In an embodiment of the present disclosure, along with the sulfur-carbon composite, the positive electrode active material layer may comprise a binder resin. Additionally, in addition to the positive electrode active material and the binder resin, the positive electrode active material layer may further comprise a conductive material as necessary. In this instance, in an embodiment of the present disclosure, the positive electrode active material layer may preferably comprise the positive electrode active material in an amount of 70 wt% or more, 85 wt% or more or 90 wt% or more based on 100 wt% of the positive electrode active material layer.

The positive electrode active material comprises the above-described sulfur-carbon composite. In an embodiment of the present disclosure, the sulfur (S) content in the sulfur-carbon composite may be preferably 60 wt% or more, 65 wt% or more, 70 wt% or more, or 75 wt% or more based on 100 wt% of the positive electrode active material layer. When the sulfur (S) content in the positive electrode is less than 60 wt%, it may be difficult to improve the energy density of the battery due to the insufficient electrode active material, but the present disclosure is not limited thereto. Additionally, in an embodiment of the present disclosure, the positive electrode active material layer may comprise the sulfur-carbon composite having the above-described feature in an amount of 50 wt% or more, 70 wt% or more, 90 wt% or more, or 95 wt% or more based on 100 wt% of the positive electrode active material. In an embodiment of the present disclosure, the positive electrode active material may consist of the sulfur-carbon composite.

In the positive electrode for the lithium sulfur battery, the porous carbon material has a broadness factor (BF) of 1 to 6, wherein the broadness factor is the ratio of the particle size $D_{90}$ to the particle size $D_{10}$ of the porous carbon material.

In a further aspect which may be combined with one or more of the above embodiments according to the invention, the present disclosure provides a positive electrode for a lithium-sulfur battery, comprising:

a current collector and a positive electrode active material layer on at least one surface of the current collector,
wherein the positive electrode active material layer comprises a sulfur-carbon composite,

- the sulfur-carbon composite comprises a porous carbon material and a sulfur-based material,
- the sulfur-based material is located on at least a part of the surface of the porous carbon material, and

wherein the sulfur carbon composite contains particles with rounded segments.

The rounded segments may at least partly be merged to a botryoidal texture.

An error of an area of arbitrary ten sulfur-carbon composites per area of 50 $\mu$m X 50 $\mu$m in a top view image of the positive electrode active material layer may be based on particles with rounded segments determined according to SEM may be 100% or less.

Additionally, in addition to the sulfur-carbon composite, the positive electrode active material layer may further comprise a common positive electrode active material used in lithium secondary batteries. The commonly used positive electrode active material may include, for example, at least one of lithium transition metal oxide; lithium iron phosphate; lithium nickel-manganese-cobalt oxide; or oxide with partial substitution by other transition metals in lithium nickel-manganese-cobalt oxide, but is not limited thereto. Specifically, the positive electrode active material may include, for example, a layered compound such as lithium cobalt oxide ($LiCoO_2$), lithium nickel oxide ($LiNiO_2$) or a compound with substitution by one or more transition metals; lithium manganese oxide of formula $Li_{1+x}Mn_{2-x}O_4$ (where x is 0 to 0.33), $LiMnO_3$, $LiMn_2O_3$, $LiMnO_2$; lithium copper oxide ($Li_2CuO_2$); vanadium oxide such as $LiV_3O_8$, $LiV_3O_4$, $V_2O_5$, $Cu_2V_2O_7$; Ni site lithium nickel oxide represented by formula $LiNi_{1-x}M_xO_2$ (where M = Co, Mn, Al, Cu, Fe, Mg, B or Ga, x = 0.01 to 0.3); lithium manganese composite oxide represented by formula $LiMn_{2-x}M_xO_2$ (where M = Co, Ni, Fe, Cr, Zn or Ta, x = 0.01 to 0.1) or $Li_2Mn_3MO_8$ (where M = Fe, Co, Ni, Cu or Zn); lithium metal phosphate $LiMPO_4$ (where M = Fe, CO, Ni, or Mn); lithium nickel-manganese-cobalt oxide $Li_{1+x}(Ni_aCo_bMn_c)_{1-x}O_2$ (x = 0 ~ 0.03, a = 0.3 to 0.95, b = 0.01 to 0.35, c = 0.01 to 0.5, a+b+c=1); oxide $Li_a[Ni_bCo_cMn_dAl_e]_{1-f}M1_fO_2$ (M1 is at least one selected from the group consisting of Zr, B, W, Mg, Ce, Hf, Ta, La, Ti, Sr, Ba, F, P and S, $0.8 \leq a \leq 1.2$, $0.5 < b \leq 0.99$, $0 < c < 0.5$, $0 < d < 0.5$, $0.01 \leq e \leq 0.1$, $0 \leq f \leq 0.1$) partially substituted by aluminum in lithium nickel-manganese-cobalt oxide; oxide $Li_{1+x}(Ni_aCo_bMn_cM_d)_{1-x}O_2$ (x = 0 to 0.03, a = 0.3 to 0.95, b = 0.01 to 0.35, c = 0.01 to 0.5, d = 0.001 to 0.03, a+b+c+d=1, M is any one selected from the group consisting of Fe, V, Cr, Ti, W, Ta, Mg and Mo) partially substituted by other transition metal in lithium nickel-manganese-cobalt oxide, a disulfide compound; and $Fe_2(MoO_4)_3$, but is not limited thereto.

Meanwhile, the positive electrode current collector may include various types of positive electrode current collectors used in the corresponding technical field. For example, the positive electrode current collector may include stainless steel, aluminum, nickel, titanium, sintered carbon or aluminum or stainless steel treated with carbon, nickel, titanium or silver on the surface. The positive electrode current collector may be typically 3 $\mu$m to 500 $\mu$m in thickness, and the positive electrode current collector may have microtexture on the surface to increase the adhesion strength of the positive electrode active material. The positive electrode current collector may come in various forms, for example, a film, a sheet, a foil, a net, a porous body, a foam and a nonwoven.

The binder resin may play a role in attaching the positive electrode active material particles to each other and improving the adhesion strength between the positive electrode active material and the positive electrode current collector, and specific examples may include at least one of polyvinylidenefluoride (PVDF), a vinylidene fluoride-hexafluoropropylene copolymer (PVDF-co-HFP), polyvinylalcohol, polyacrylonitrile, carboxymethyl cellulose (CMC), starch, hydroxypropylcellulose, regenerated cellulose, polyvinylpyrrolidone, polytetrafluoroethylene, polyethylene, polypropylene, ethylenepropylene-diene monomer rubber (EPDM rubber), sulfonated-EPDM, styrene butadiene rubber (SBR), fluoro rubber, or a variety of copolymers thereof. The binder resin may be included in an amount of 1 to 30 wt%, preferably 1 to 20 wt%, and more preferably 1 to 10 wt% based on the total weight of the positive electrode active material layer.

The conductive material may be used to provide conductive properties to the electrode, and may include, without limitation, any conductive material having the ability to conduct electrons without causing any chemical change in the corresponding battery. Specific examples may include at least one of graphite such as natural graphite or artificial graphite; a carbon-based material such as carbon black, acetylene black, ketjen black, channel black, furnace black, lamp black, thermal black, carbon fibers, carbon nanotubes; metal powder or metal fibers of copper, nickel, aluminum, silver; conductive whiskers of zinc oxide, potassium titanate; conductive metal oxide such as titanium oxide; or conductive polymer such as polyphenylene derivatives. When the conductive material is used, the conductive material may be typically included in an amount of 1 to 30 wt%, preferably 1 to 20 wt%, and more preferably 1 to 10 wt% based on the total weight of the positive electrode active material layer.

The positive electrode may be manufactured by the common method well known in the corresponding technical field.

For example, describing the method for manufacturing the positive electrode of the present disclosure in detail, first, the binder resin is dissolved in a solvent for preparing a slurry, and the conductive material is dispersed. The solvent for preparing the slurry may preferably include solvents that may uniformly disperse the positive electrode active material and the binder resin, and if necessary, the conductive material and easily evaporate. Typically, acetonitrile, methanol, ethanol, tetrahydrofuran, water and isopropylalcohol may be used.

Subsequently, the positive electrode active material and optionally an additive are uniformly dispersed in the solvent in which the conductive material is dispersed to prepare a positive electrode slurry. The amount of the solvent, the positive electrode active material, or optionally, the additive included in slurry is insignificant in the present disclosure, and they may be included in a sufficient amount for the proper viscosity for the coating of the slurry.

The prepared slurry is coated on the current collector and vacuum dried to form the positive electrode. The slurry may be coated on the current collector to a proper thickness according to the viscosity of the slurry and desired thickness of the positive electrode.

The coating may be performed by methods commonly used in the corresponding technical field, but for example, may be performed by applying the positive electrode active material slurry over an upper surface of the positive electrode current collector and uniformly spreading using a doctor blade. Besides, the coating may be performed by die casting, comma coating, screen printing or the like.

The drying is not limited to a particular condition, but may be performed in a vacuum oven of 50 to 200°C within 1 day.

According to another aspect of the present disclosure, there is provided a lithium-sulfur battery comprising the above-described positive electrode.

Specifically, the lithium-sulfur battery comprises an electrode assembly comprising a positive electrode, a negative electrode and a separator interposed between the positive electrode and the negative electrode; and an electrolyte, wherein the positive electrode comprises the above-described positive electrode active material.

For example, the electrode assembly may form a stack type or stack/folding structure including the negative electrode and the positive electrode stacked with the separator interposed between the negative electrode and the positive electrode, or a j elly-roll structure including the negative and positive electrodes and the separator rolled up. Furthermore, in the jelly-roll structure, an additional separator may be placed on the outer side to prevent the contact between the negative electrode and the positive electrode.

The negative electrode comprises a negative electrode current collector; and a negative electrode active material layer on at least one surface of the negative electrode current collector, and the negative electrode active material layer comprises a negative electrode active material, a conductive material and a binder.

Subsequently, the negative electrode will be described in more detail.

The negative electrode may comprise a long sheet shaped negative electrode current collector and a negative electrode active material layer on one or two surfaces of the negative electrode current collector, and the negative electrode active material layer may comprise the negative electrode active material and the binder resin. Additionally, the negative electrode active material layer may further comprise the conductive material if necessary.

Specifically, the negative electrode may be manufactured by coating a negative electrode slurry prepared by dispersing the negative electrode active material, the conductive material and the binder in a solvent such as dimethyl sulfoxide (DMSO), isopropyl alcohol, N-methylpyrrolidone (NMP), acetone and water on one or two surfaces of the long sheet shaped negative electrode current collector, and removing the solvent from the negative electrode slurry through a drying process, and rolling. Meanwhile, the negative electrode comprising an uncoated portion may be manufactured by not coating the negative electrode slurry at part of the negative electrode current collector, for example, an end of the negative electrode current collector when coating the negative electrode slurry.

The negative electrode active material may include a material capable of reversible intercalation or deintercalation of lithium ($Li^+$), a material capable of reversibly forming a lithium containing compound by reaction with lithium ions, a lithium metal or a lithium alloy. The material capable of reversible intercalation or deintercalation of lithium ions may include, for example, crystalline carbon, amorphous carbon or a mixture thereof, and specifically, artificial graphite, natural graphite, graphitizable carbon fibers, amorphous carbon, soft carbon and hard carbon, but is not limited thereto.

The material capable of reversibly forming the lithium containing compound by reaction with the lithium ions may be, for example, tin oxide, titanium nitrate or a silicon-based compound.

The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn). Preferably, the negative electrode active material may be a lithium metal, and specifically, may be in the form of a lithium metal foil or lithium metal powder.

The silicon-based compound may be Si, Si-Me alloy (where Me is at least one selected from the group consisting of Al, Sn, Mg, Cu, Fe, Pb, Zn, Mn, Cr, Ti, and Ni), $SiO_y$ (where 0<y<2), Si-C composite or a combination thereof, and preferably $SiO_y$ (where 0<y<2). Since the silicon-based compound has high theoretical capacity, when the silicon-based compound is included as the negative electrode active material, it may be possible to improve capacity characteristics.

The negative electrode current collector may include negative electrode current collectors commonly used in the corresponding technical field, and may include, for example, copper, stainless steel, aluminum, nickel, titanium, sintered carbon, copper or stainless steel treated with carbon, nickel, titanium or silver on the surface, and an aluminum-cadmium alloy. The negative electrode current collector may be typically 3 to 500 $\mu$m in thickness, and in the same way as the positive electrode current collector, may have microtexture on the surface to enhance the bonding strength of the negative electrode active material. For example, the negative electrode current collector may come in various forms, for example, a film, a sheet, a foil, a net, a porous body, a foam and a nonwoven.

The binder resin may play a role in attaching the negative electrode active material particles to each other and improving the adhesion strength between the negative electrode active material and the negative electrode current collector. Specific examples may include at least one of polyvinylidene fluoride (PVDF), a vinylidene fluoride-hexafluoropropylene copolymer (PVDF-co-HFP), polyvinylalcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluoro rubber, or a variety of copolymers thereof. The binder may be included in an amount of 1 to 30 wt%, preferably 1 to 20 wt%, and more preferably 1 to 10 wt% based on the total weight of the negative electrode active material layer.

The conductive material included, if necessary, may be used to provide conductive properties to the negative electrode, and may include, without limitation, any conductive material having the ability to conduct electrons without causing any chemical change in the corresponding battery. Specific examples may include at least one of graphite such as natural graphite or artificial graphite; a carbon-based material such as carbon black, acetylene black, ketjen black, channel black, furnace black, lamp black, thermal black, carbon fibers, carbon nanotubes; metal powder or metal fibers of copper, nickel, aluminum, silver; conductive whiskers of zinc oxide, potassium titanate; conductive metal oxide such as titanium oxide; or conductive polymer such as polyphenylene derivatives. When the conductive material is used, the conductive material may be typically included in an amount of 1 to 30 wt%, preferably 1 to 20 wt%, and more preferably 1 to 10 wt% based on the total weight of the negative electrode active material layer.

The separator is disposed between the negative electrode and the positive electrode in the electrode assembly. The separator may separate the negative electrode from the positive electrode and provide movement channels of lithium ions, and may include, without limitation, any type of separator commonly used in lithium secondary batteries. Specifically, the separator may include a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer or a stack structure of two or more of them. Additionally, commonly used porous nonwoven fabrics, for example, nonwoven fabrics made of high melting point glass fibers, polyethyleneterephthalate fibers may be used. Additionally, coated separators comprising ceramics or polymer may be used to ensure heat resistance or mechanical strength.

Another aspect of the present disclosure relates to an electrochemical device comprising the electrode assembly. The electrochemical device may comprise a battery case accommodating the electrode assembly and the electrolyte, and the battery case may include, without limitation, any appropriate type of battery case commonly used in the corresponding technical field, for example, a pouch type or a metal can type.

The electrolyte used in the present disclosure may include any type of electrolyte available in lithium secondary batteries, for example, an organic liquid electrolyte, an inorganic liquid electrolyte, a solid polymer electrolyte, a gel polymer electrolyte, a solid inorganic electrolyte and a molten inorganic electrolyte, but is not limited thereto.

Specifically, the electrolyte may comprise an organic solvent and a lithium salt.

The organic solvent may include, without limitation, any type of organic solvent that may act as a medium for the movement of ions involved in the electrochemical reaction of the battery. Specifically, the organic solvent may include an ester-based solvent such as methyl acetate, ethyl acetate, $\gamma$-butyrolactone, $\epsilon$-caprolactone; an ether-based solvent such as dibutyl ether or tetrahydrofuran; a ketone-based solvent such as cyclohexanone; an aromatic hydrocarbon-based solvent such as benzene, fluorobenzene; a carbonate-based solvent such as dimethylcarbonate (DMC), diethylcarbonate (DEC), methylethylcarbonate (MEC), ethylmethylcarbonate (EMC), ethylene carbonate (EC), propylene carbonate (PC); an alcohol-based solvent such as ethylalcohol, isopropyl alcohol; nitriles of R-CN (R is C2-C20 straight-chain, branched-chain or cyclic hydrocarbon, and may comprise an exocyclic double bond or ether bond); amides such as dimethylformamide; dioxolanes such as 1,3-dioxolane; or sulfolanes.

Meanwhile, in an embodiment of the present disclosure, it is desirable to comprise a heterocylic compound comprising an oxygen atom or a sulfur atom to form a polymer protective layer in order to suppress the production of lithium dendrite, and prevent electrolyte solution decomposition and side reaction on the lithium-based metal surface. The heterocylic compound may be 3 to 15 membered, preferably 3 to 7 membered, and more preferably 5 to 6 membered heterocylic compound.

The heterocylic compound may be a substituted or unsubstituted heterocylic compound with at least one selected from the group consisting of C1-C4 alkyl group, a C3-C8 cyclic alkyl group, a C6-C10 aryl group, a halogen group, a nitro group ($-NO_2$), an amine group ($-NH_2$) and a sulfonyl group ($-SO_2$); or a multi-cyclic compound of the heterocylic compound with at least one selected from the group consisting of a C3-C8 cyclic alkyl group and C6-C10 aryl group.

When the heterocylic compound is a heterocylic compound substituted by C1-C4 alkyl group, radicals are stabilized, and preferably, it may be possible to suppress side reaction between the additive and the electrolyte solution. Additionally, when the heterocylic compound is a heterocylic compound substituted by a halogen group or a nitro group, preferably, it may be possible to form a functional protective layer on the lithium-based metal surface. The functional protective layer may be a stable and compact protective layer, and may allow uniform deposition of the lithium-based metal and suppress side reaction between polysulfide and the lithium-based metal.

Specifically, the heterocylic compound may comprise, for example, at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl) furan, thiophene, 2-methylthiophene, 2-ethylthiphene, 2-propylthiophene, 2-butylthiophene, 2,3-dimethylthiophene, 2,4-dimethylthiophene and 2,5-dimethylthiophene, and preferably at least one selected from the group consisting of 2-methylfuran and 2-methylthiophene.

Meanwhile, in an embodiment of the present disclosure, a nonaqueous solvent of the electrolyte solution may comprise an ether-based solvent to improve charge/discharge performance of the battery. As the nonaqueous solvent, the ether-based solvent may include at least one of cyclic ether (for example, 1,3-dioxolane or tetrahydrofuran, tetrohydropyran, etc.), a linear ether compound (for example, 1,2 dimethoxyethane, etc.) or low viscosity fluorinated ether (for example, 1H,1H,2'H,3H-decafluorodipropyl ether, difluoromethyl 2,2,2-trifluoroethyl ether, 1,2,2,2-tetrafluoroethyl trifluoromethyl ether, 1, 1,2,3,3,3-hexafluoropropyl difluoromethyl ether, 1H,1H,2'H,3H-decafluorodipropyl ether, pentafluoroethyl 2,2,2-trifluoroethyl ether, 1H,1H,2'H-perfluorodipropyl ether).

The lithium salt may include, without limitation, any compound that may provide lithium ions used in lithium secondary batteries. Specifically, the lithium salt may include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$ or $LiB(C_2O_4)_2$. Preferably, the additive may be or may comprise $LiNO_3$. The concentration of the lithium salt may be in a range between 0.1 and 5.0M, and preferably 0.1 and 3.0M. When the concentration of the lithium salt is included in the above-described range, the electrolyte may have proper conductivity and viscosity and exhibit the outstanding electrolyte performance, thereby effectively transporting lithium ions.

In addition to the above-described constituent substances of the electrolyte, the electrolyte may further comprise an additive to improve the life characteristics of the battery, prevent the capacity fading of the battery and improve the discharge capacity of the battery. For example, the additive may at least one of $LiNO_3$, a haloalkylene carbonate-based compound such as difluoro ethylene carbonate, pyridine, triethylphosphite, triethanolamine, cyclic ether, ethylene diamine, n-glyme, hexamethylphosphoric triamide, nitrobenzene derivatives, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, but is not limited thereto. The additive may be included in an amount of 0.1 to 10 wt%, and preferably 0.1 to 5 wt% based on the total weight of the electrolyte.

Meanwhile, in an embodiment of the present disclosure, in the lithium-sulfur battery of the present disclosure, a ratio (El/S) of the total weight of the electrolyte to the total weight of sulfur (S) in the positive electrode may be preferably, for example, 3.5 g/g or less, for example, 3.3 g/g or less or 3.2 g/g or less. Additionally, in the lithium-sulfur battery, the ratio (El/S) of the total weight of the electrolyte to the total weight of sulfur (S) in the positive electrode may be 3.0 to 3.5 g/g, 3.1 to 3.2 g/g, and for example, 3.2 g/g.

Using the sulfur-carbon composite according to the present disclosure, the lithium-sulfur battery may have the above-described range of El/S ratios, thereby improving energy density. However, the lithium-sulfur battery using the sulfur-carbon composite may have higher El/S ratios than the above-described range, and the present disclosure is not limited thereto.

The lithium-sulfur battery is not limited to a particular shape and may come in various shapes, for example, cylindrical, stack and coin shapes.

Additionally, the present disclosure provides a battery module including the lithium-sulfur battery as a unit battery. The battery module may be used as a source of power for medium- and large-scale devices requiring high temperature stability, long cycle life characteristics and high capacity characteristics.

According to one embodiment of the present invention, the lithium-sulfur battery may exhibit an effect of maintaining a high power density during discharging by using the above-described positive electrode active material or by using the above-described positive electrode. Specifically, during discharging, an effect of maintaining a power density of 2.1 kW/kg or more for 10 seconds may be exhibited.

In one embodiment of the present invention, the power density for 10 seconds may be measured by calculating according to Equation 4 after flowing a current for 10 seconds to the lithium-sulfur battery to be measured, but the measurement method is limited thereto.

Power density (kW/kg) = [(V min) X (Max C-rate) X (discharge capacity)]/(battery weight)     [Equation 4]

According to an embodiment of the present disclosure, the lithium-sulfur battery using the above-described positive electrode active material may have the discharge capacity per weight of sulfur (S) of 1,000 mAh/g(S) or more, but the present disclosure is not limited thereto.

Examples of the medium- and large-scale device may include power tools; electric cars including electric vehicles (EV), hybrid electric vehicles (HEV), plug-in hybrid electric vehicles (PHEV); electric two-wheeled vehicles including E-bikes, E-scooters; electric golf carts; energy storage systems that work using power produced by an electric motor, but is not limited thereto.

The lithium-sulfur battery may be a pouch cell lithium-sulfur battery, a coin cell lithium-sulfur battery or a cylindrical cell lithium-sulfur battery, preferably a pouch cell lithium-sulfur battery.

**[Manufacture** of sulfur-carbon composite]

Preparation Example 1. Preparation of the porous carbon material

Carbon nanotubes (CNT) (Entangled multi-walled carbon nanotube, BET specific surface area 200 $m^2/g$) were prepared as a porous carbon material to manufacture a sulfur-carbon composite. The prepared carbon nanotubes were milled at room temperature using a centrifugal grinder (ZM 200 of Retsch GmbH), classified according to the particle size and used to manufacture the sulfur-carbon composite as below. To achieve the target $D_{50}$ for the desired carbon nanotubes, the mesh size of the sieve and the rotation speed were controlled, for obtaining the carbon nanotubes with the controlled particle size. The conditions of the particle size of the obtained porous carbon material are shown in Table 1 below.

In case of Example 1 in Table 1, Carbon nanotubes (CNT) and sulfur ($S_8$) were uniformly mixed at the sulfur content of 75 wt% based on the total weight 100 wt% of the total combined amount of carbon nanotubes (CNT) and the sulfur ($S_8$) and milled by ball milling, and then placed at an oven of 155°C for 30 minutes to manufacture a sulfur-carbon composite. The CNT used had $D_{10}+D_{90}$ of 51 $\mu$m, $D_{50}$ of 20 $\mu$m, and a BF of 7 or less. Examples 2 to 4 have been prepared by accordingly to Table 1 below.

Preparation Example 2. Preparation of the porous carbon material

Carbon nanotubes (CNT) (entangled multi-wall carbon nanotubes, BET specific surface area of 200 $m^2/g$) were milled by jet milling to obtain the milled (pulverized) carbon nanotubes.

Manufacture of the sulfur-carbon composite

Using the carbon nanotubes obtained in Preparation Example 1 or Preparation Example 2 as a porous carbon material, the porous carbon material and sulfur ($S_8$) were mixed at the weight ratio shown in Table 1 and milled by ball milling, and then placed at an oven at 155 °C for 30 minutes to manufacture a sulfur-carbon composite.

[Table 1]

| Sulfur-carbon composite | Porous carbon material | | | | | sulfur(S) percent by weight |
|---|---|---|---|---|---|---|
| | Manufacturing method | $D_{10}+D_{90}$ | BF ($D_{90}/D_{10}$) | Particle size $D_{50}$ | | |
| Example 1 | Preparation Example 1, Mesh size 80 $\mu$m RPM 18,000 linear velocity 94.2 m/s | 51 $\mu$m | 5.49 | 24 $\mu$m | | 75 wt% |
| Example 2 (not according to the invention) | Preparation Example 1, Mesh size 120 $\mu$m RPM 10,000 linear velocity 31.4 m/s | 86 $\mu$m | 5.55 | 35 $\mu$m | | 75 wt% |
| Example 3 (not according to the invention) | Preparation Example 1, Mesh size 80 $\mu$m RPM 14,000 linear velocity 73.3 m/s | 70 $\mu$m | 5.38 | 29 $\mu$m | | 75 wt% |
| Comparative Example 1 | Preparation Example 2 | 128 $\mu$m | 11.05 | 38 $\mu$m | | 75 wt% |

[Table 2]

| Sulfur-carbon composite | Porous carbon material | | | | | sulfur(S) weigh |
|---|---|---|---|---|---|---|
| | Preparation method | $D_{10}+D_{90}$ | BF $(D_{90}/D_{10})$ | Particle size $D_{50}$ | | |
| Example 4 (not according to the present invention) | Preparation Example 1, Mesh size 80 $\mu$m RPM 18,000 linear velocity 94.2 m/s | 90 $\mu$m | 5.42 | 38 $\mu$m | | 70 wt% |
| Comparative Example 2 | Preparation Example 2 | 128 $\mu$m | 10.68 | 38 $\mu$m | | 70 wt% |

**[Measurement method of the shape and the particle size of porous carbon materials]**

Particle sizes corresponding to $D_{10}$, $D_{50}$ and $D_{90}$ of the porous carbon material obtained above were measured by a dry method using a particle size analyzer (model name: Bluewave, manufacturer: Microtrac). When the carbon material comprises secondary particles, i.e., agglomerates of primary particles, the size of the primary particle was observed and measured using a SEM (model name: SEM, manufacturer: JEOL).

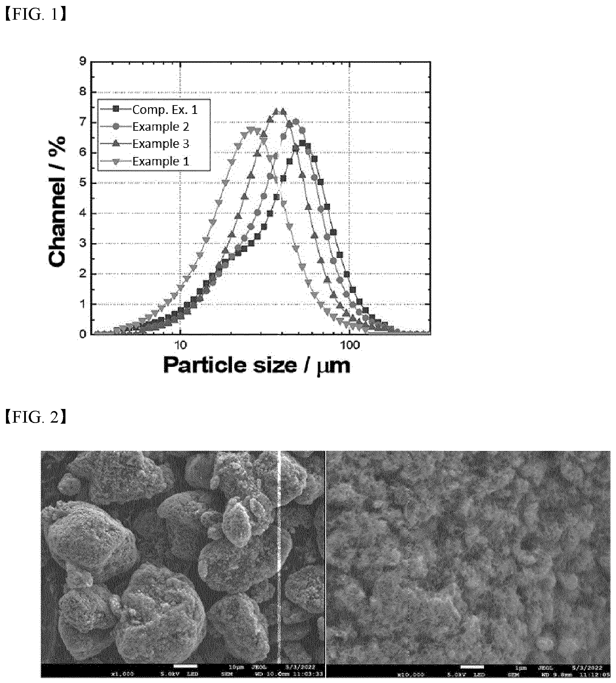

The BF ratio was calculated as a value of $D_{90}/D_{10}$ or a ratio of particle size $D_{90}$ to particle size $D_{10}$. FIG. 1 shows the measurement results of the particle size distribution of the porous carbon materials used in the Examples 1 to 3 (Examples 2 and 3 not being according to the present invention) and in Comparative Example 1.

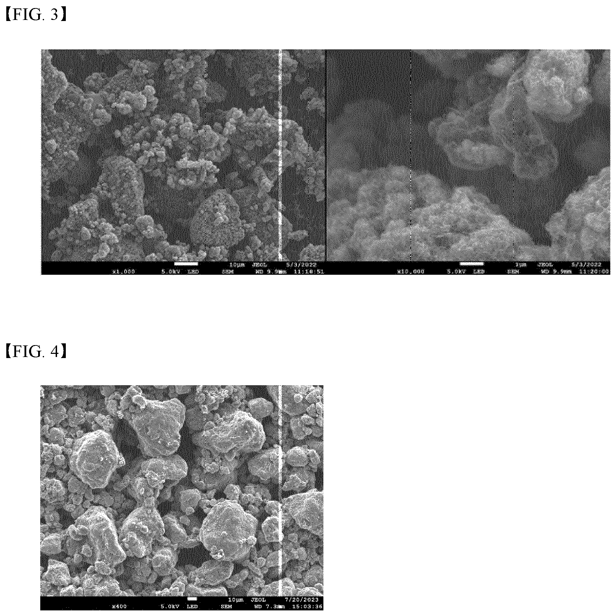

The SEM images of the porous carbon materials used in Example 4 (not according to the present invention) and Comparative Example 2 are shown in FIG. 2 and in FIG. 3, respectively.

**[Manufacture of the positive electrode]**

A positive electrode for a lithium-sulfur battery was manufactured using the sulfur-carbon composites obtained in each of the Examples 1 to 4 (Examples 2 to 4 not being according to the present invention) and in Comparative Example 1 and Comparative Example 2 as described below.

90 wt% of the sulfur-carbon composite as a positive electrode active material, 5 wt% of Denka Black as a conductive material, and 5 wt% of styrene butadiene rubber/carboxymethyl cellulose (a weight ratio of SBR:CMC=7:3) as a binder were added to a solvent and mixed together to prepare a positive electrode slurry composition.

The prepared positive electrode slurry composition was coated on a 20 $\mu$m thick aluminum current collector to the thickness of 350 $\mu$m, dried at 50 °C for 12 hours, and rolled using a roll press to manufacture a positive electrode.

The sulfur (S) content in the positive electrodes to which the sulfur-carbon composites of the Examples 1 to 3 (Examples 2 and 3 not being according to the present invention) and Comparative Example 1 were applied, was 67.5 wt%, and the sulfur (S) content in the positive electrodes to which the sulfur-carbon composites of Example 4 (not according to the present invention) and Comparative Example 2 were applied was 63.0 wt%.

**[Evaluation of the area uniformity of the sulfur-carbon composites in the positive electrodes]**

After obtaining the top-view SEM images of the positive electrode active material layer manufactured using the sulfur-carbon composites of the Example 1, Example 44 (not according to the present invention), Comparative Example 1 and Comparative Example 2, the areas of arbitrary ten sulfur-carbon composites were measured per 50 $\mu$m X 50 $\mu$m area in the top view images of the positive electrode active material layer. From the measured values the average and standard deviation were calculated, and the error was calculated according to Equation 2 below.

The areas of the sulfur-carbon composites were thereby measured through the number of pixels occupied by one sulfur-carbon composite on the SEM image, and the average was measured as an arithmetic mean value.

FIG. 4 shows a top-view SEM image of the positive electrode manufactured using the sulfur-carbon composite of Comparative Example 1. FIG. 5 shows the top-view SEM images of the manufactured positive electrode using the sulfur-carbon composite of Example 1. The measurement results are shown in Table 3 below.

[Equation 2]

$$\text{Error (\%)} = [\text{standard deviation/average}] \times 100$$

[Table 3]

| Sulfur-carbon composite | Error of the area of the sulfur-carbon composite in the positive electrode (%) |
|---|---|
| Example 1 | 68.7 |
| Example 2 4 (not according to the present invention) | 70.4 |
| Example 34 (not according to the present invention) | 67.2 |
| Example 44 (not according to the present invention) | 64.1 |
| Comparative Example 1 | 150.2 |
| Comparative Example 2 | 135.1 |

**[Tortuosity value of cross-section evaluation of electrode]**

SEM images (model name: SEM, manufacturer: JEOL) of the vertical cross-section of the positive electrodes manufactured using the sulfur-carbon composites of example 2 and comparative example 2 were acquired, as shown in FIG 6A and FIG. 7A.

For determining the tortuosity value, one point on the surface of the current collector 1 was randomly selected in the cross-section SEM image of the positive electrode 2. A straight connection 3 perpendicular to the surface of the current collector was made between the point 1 and the surface 4 of the positive electrode 2 and the length of the straight connection 3 was determined. In other words, one point on the surface of the current collector was randomly selected in the obtained cross-section SEM image. A straight connection (line) perpendicular to the surface of the current collector is made between the randomly selected point and the surface of the positive electrode above this point. The length of the straight connection (line) (L) was measured as shown in FIG. 6B and FIG. 7B.

At next, the minimum distance 5 within the pore space between point 1 and the point where the straight connection 3 and the surface 4 meet was measured, that is, the minimum distance 5 it can be traveled along the surfaces of the particles forming the active layer of the positive electrode.

3) A tortuosity value was determined according to the following formula:

$$Turtuosity\ value = \frac{minimum\ distance\ 5}{length\ of\ straight\ connection\ 3}$$

Wherein both the minimum distance 5 and the length of the straight connection 3 are given with the same length unit.

4) The average tortuosity value was determined by determining different tortuosity values at different locations A, B and C of the positive electrode 2 and calculating an average value thereof.

[Table 4]

| Sulfur-carbon composite | Positive electrode | | | | |
|---|---|---|---|---|---|
| | Images | Tortuosity value at A point (C/L) | Tortuosity value at B point (C/L) | Tortuosity value at C point (C/L) | Average tortuosity value |
| Comparative Example 2 | Fig. 6B | 2.18 | 2.44 | 2.15 | 2.26 |
| Example 4 4 (not according to the present invention) | Fig. 7B | 1.55 | 1.50 | 1.21 | 1.42 |

**[Tortuosity value of top-view evaluation of electrode]**

SEM images (model name: SEM, manufacturer: JEOL) of the top view of the positive electrodes are acquired under the conditions specified herein in detail. Respective exemplary images are shown in FIG. 16A for example 1 and FIG 16B for comparative example 1 with a magnification of the SEM image of 400 times. The SEM images have a size of 200 $\mu$m X 200 $\mu$m. For determining the tortuosity value, one point $X_1$ on the surface of the current collector is randomly selected in the top-view SEM image of the positive electrode. A line segment $L_X$ with a length of 200 $\mu$m from position $X_1$ to position

$X_2$ is drawn on the top-view SEM image of the positive electrode. Then a line segment $L_Y$ with a length of 200 $\mu$m from position $Y_1$ to position $Y_2$, which is perpendicular to $L_X$ and with the condition that the line segments $L_X$ and $L_Y$ half each other, is drawn on the top-view SEM image of the positive electrode. Thus, $L_X$ and $L_Y$ may form a cross as shown in FIGS. 16a and 16b.

At next, the shortest line between the positive electrode active material particles from $X_1$ to $X_2$ on the top-view SEM image of the positive electrode is measured to determine $D_X$. Then, the shortest line between the positive electrode active material particles from $Y_1$ to $Y_2$ on the top-view SEM image of the positive electrode is measured to determine $D_Y$. Similar as described for the tortuosity value of cross-section evaluation of electrode as it is presented above.

Thus, $D_X$ and $D_Y$, respectively, reflect the minimum distance along the surfaces of the particles forming the active layer of the positive electrode.

The average tortuosity value of the top-view SEM image are determined according to the following formula 1:

[Formula 1]

$$T_{Avg} = \frac{T_X + T_Y}{2} = \frac{\frac{D_X}{L_X} + \frac{D_Y}{L_Y}}{2} \ ,$$

$L_X$ is a line segment with a length of 200 $\mu$m from position $X_1$ to position $X_2$,
$L_Y$ is a line segment with a length of 200 $\mu$m from position $Y_1$ to position $Y_2$, wherein $L_Y$ is perpendicular to $L_X$ and the line segments $L_X$ and $L_Y$ half each other,
$D_X$ is the shortest line between the positive electrode active material particles from $X_1$ to $X_2$,
$D_Y$ is the shortest line between the positive electrode active material particles from $Y_1$ to $Y_2$,
$T_X$ is the tortuosity value from $X_1$ to $X_2$,
$T_Y$ is the tortuosity value from $Y_1$ to $Y_2$, and
$T_{Avg}$ is the average tortuosity value of $T_X$ and $T_Y$.

The inventive Example 1 has a value below 1.7, the comparative examples have a value above 1.7.

**[Manufacture of the lithium-sulfur battery]**

The positive electrodes containing the sulfur-carbon composite obtained in each of Examples 1 to 4 (with Examples 2 to 4 not according to the present invention) and Comparative Example 1 and Comparative Example 2 were used for the manufacture of a positive electrode of a lithium-sulfur battery as described below.

The positive electrode manufactured as described above and a negative electrode were placed with a separator interposed between the positive electrode and the negative electrode to form an electrode assembly. The electrode assembly was received in a pouch-type case and an electrolyte solution was filled to manufacture a lithium-sulfur battery. For the negative electrode, a 35 $\mu$m thick lithium metal foil was used. For the separator, a porous polyethylene separator having a thickness of 16 $\mu$m was used. The electrolyte was prepared by adding 3 wt% of $LiNO_3$ to an organic solvent mixture of 2-methyl furan and dimethoxyethanol (33/77 volume ratio) at the concentration of 1 M $LiPF_6$

A pouch cell was manufactured, comprising the positive electrode and the negative electrode manufactured as described above. The El/S ratio in each manufactured battery was controlled to fulfill the requirement of 3.1 g/g.

**[Evaluation of electrochemical performance]**

Evaluation of 1.0 C discharge capacity

Each lithium-sulfur battery manufactured as described above was discharged at 0.5 C in CC mode at 25 °C until 1.8 V and charged with 0.3 C at a constant current until 2.5V, and then discharged at 1.0 C. The discharge capacity was measured based on the weight of sulfur (S). (mAh/g(S) (g(S) is the weight of sulfur)

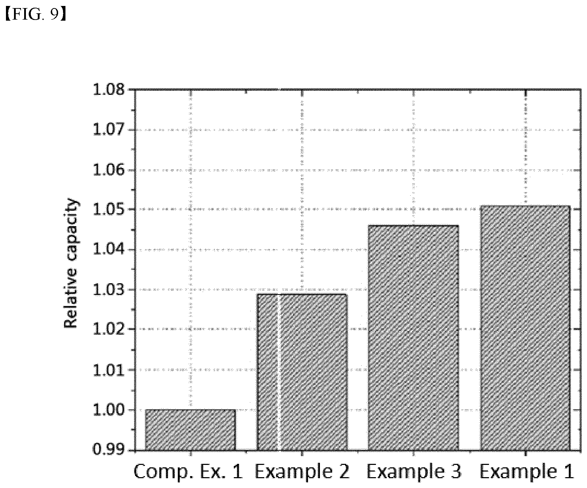

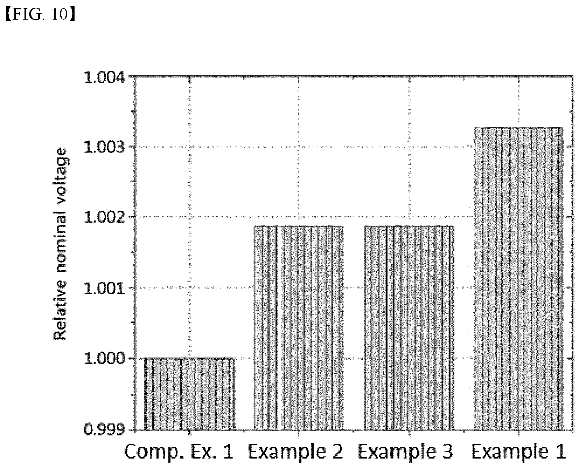

FIG. 8 is a graph showing the changes of the discharge capacity during repeated charging/discharging. FIG. 9 shows the relative capacity of the Examples 1 to 3 when the discharge capacity of the Comparative Example 1 is 1. FIG. 10 shows the relative nominal voltage of Examples 1 to 3 when the voltage of Comparative Example 1 is at 1.

Table 5 shows the capacity measured at the initial discharge after charge.

[Table 5]

|  | Sulfur (S) content in sulfur-carbon composites | 1.0 C discharge capacity (mAh/g(S)) |
|---|---|---|
| Example 1 | 75 wt% | 1,030 |
| Example 2 (not according to the present invention) | 75 wt% | 989 |
| Example 3 (not according to the present invention) | 75 wt% | 996 |
| Comparative Example 1 | 75 wt% | 976 |
| Example 4 (not according to the present invention) | 70 wt% | 1,035 |
| Comparative Example 2 | 70 wt% | 915 |

Evaluation of 0.5 C discharge capacity and energy density

Each lithium-sulfur battery manufactured as described above was discharged at 0.5 C in CC mode at 25 °C until 1.8 V and charged with 0.5 C constant current until 2.5 V, and the discharge capacity was measured/compared. The measurement results are shown in Table 6. The discharge capacity was measured based on the weight of sulfur. (mAh/g(S)) (g(S) is the weight of sulfur))

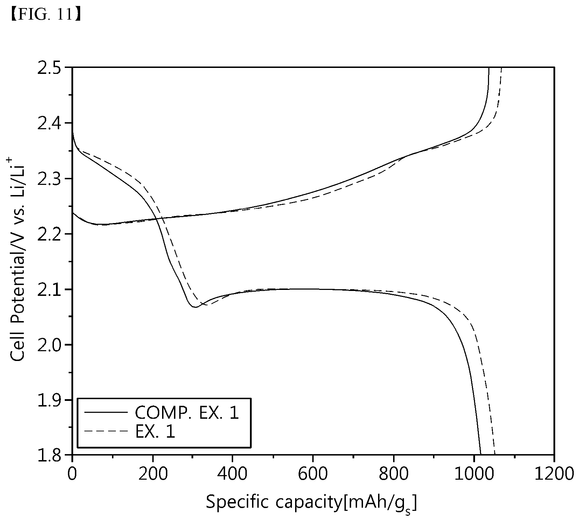

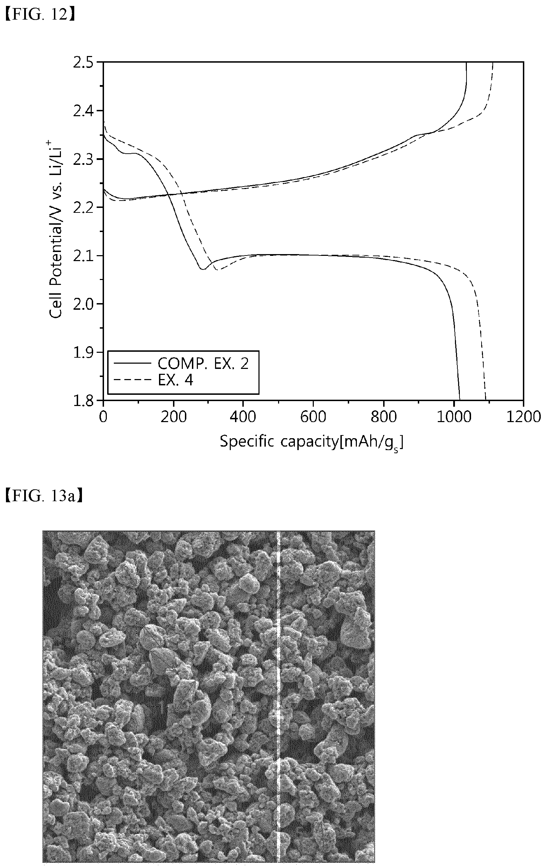

In addition, the evaluation results of the 0.5 C discharge capacity of the battery using the sulfur-carbon composites of Example 1 and Comparative Example 1 are shown in FIG. 11. The evaluation results of the 0.5 C discharge capacity of the battery using the sulfur-carbon composites of Example 2 (not according to the present invention) and Comparative Example 2 are shown in FIG. 12. The results of the measured discharge capacities are shown in Table 6.

The energy density was measured according to Equation 3 below using the measured 0.5 C discharge capacity values. The relative values of the energy density of Example 1 based on the energy density of Comparative Example 1, and the energy density of Comparative Example 2 based on the energy density of Comparative Example 2 are shown in Table 6.

[Equation 3]

$$\text{Energy density} = [(\text{discharge capacity X drive voltage})]/(\text{cell weight})$$

[Table 6]

|  | Sulfur (S) content in sulfur-carbon composites | 0.5 C discharge capacity (mAh/g(S)) | Energy density (relative value) |
|---|---|---|---|
| Example 1 | 75 wt% | 1,073 | 1.06 |
| Comparative Example 1 | 75 wt% | 1,015 | 1.00 |
| Example 2 (not according to the present invention) | 70 wt% | 1,092 | 1.07 |
| Comparative Example 2 | 70 wt% | 1,038 | 1.00 |

10 seconds power density evaluation

For each lithium-sulfur battery manufactured as described above, after passing the current for 10 seconds (discharge conditions: 1.5V, 5C), the power density was calculated according to Equation 4, and the results are shown in Table 7 below.

Power density (kW/kg) = [(V min) X (Max C-rate) X (discharge capacity)]/(battery weight)        [Equation 4]

[Table 7]

|  | Target | 10 seconds power density (kW/kg) |
|---|---|---|
| Example 1 | 2.1 kW/kg or more | 2.44 |
| Example 2 (not according to the present invention) | | 2.21 |
| Example 3 (not according to the present invention) | | 2.30 |
| Example 4 (not according to the present invention) | | 2.32 |
| Comparative Example 1 | | 2.01 |
| Comparative Example 2 | | 1.95 |

**[Evaluation]**

Referring to Table 2, FIG. 2 and FIG. 3, it was confirmed that the porous carbon material having a BF ($D_{90}/D_{10}$) of 7 or less (FIG. 2) had a uniform particle size compared to the porous carbon material having a large BF (FIG. 3). It was also confirmed that the gap between the porous carbon materials was narrow.

In addition, referring to Table 3, Table 4, FIG. 4, FIG. 5, FIG. 6A and FIG. 7A, it was confirmed that when the positive electrode was manufactured using a sulfur-carbon composite which includes sulfur ($S_8$) in a porous carbon material with a small BF or small particle size, the sulfur-carbon composite was evenly distributed in the positive electrode active material layer and the gap between the sulfur-carbon composites was narrow, thereby increasing the efficiency of the use of sulfur within the positive electrode.

Accordingly, referring to Tables 5 to 7 and FIG. 8 to 12, it was confirmed that the lithium-sulfur battery according to an embodiment of the present invention achieved a large discharge capacity of 1,000 mAh/g(S) or more at a high discharge rate of 1.0 C. In addition, it was confirmed that when the amount of the active material in the positive electrode was the same, a higher energy density than Comparative Examples 1 and 2 was achieved.

In particular, referring to Tables 5 to 7, when the sulfur (S) content was low, the gaps in the porous carbon materials were large, and the distribution of sulfur-carbon materials in the positive electrode was uneven (as shown in Comparative Example 2), the power density became low, thus being not suitable for high power characteristics. On the contrary, according to an embodiment of the present disclosure, in particular when comparing the discharge capacities of batteries according to Example 1 and Example 2 (not according to the present invention), it was confirmed that the electrochemical performance was increased without increasing the sulfur content and the cell capacity was increased accordingly.

Through the above series of experiments, it was confirmed that the diffusion of sulfur (S) was uniformly performed by applying a porous carbon material having a small particle size or a uniform particle size distribution as an active material carrier for a lithium-sulfur battery. Accordingly, it was confirmed that an oxidation-reduction reaction from sulfur ($S_8$) to $Li_2S$ and vis versa was uniformly performed during charging/discharging of the battery, the capacity and the charge density of the battery were increased, and an excellent high-speed output performance was achieved.

**[Evaluation as to whether positive electrode satisfies Equation 2]**

Evaluation example 1

An SEM image of the upper surface of the positive electrode active material layer of the positive electrode manufactured using the sulfur-carbon composite of each of Example 1 and Comparative example 1 was obtained. In this instance, the SEM images were obtained in 200 $\mu$m X 200 $\mu$m size at 400x magnification and in 70 $\mu$m X 70 $\mu$m size at 1,000x magnification based on the center of each of the obtained positive electrodes.

The SEM image of 70 $\mu$mX70 $\mu$m size was obtained within the area of the obtained SEM images of 200 $\mu$mX200 $\mu$m size. The SEM image of 70 $\mu$mX70 $\mu$m size may be used for verification of particle sizes in the 200 $\mu$mX200 $\mu$m size SEM image.

Subsequently, five sulfur-carbon composite particles with the biggest surface on the SEM image were selected in the obtained image of 200 $\mu$m X 200 $\mu$m size, and the five sulfur-carbon composite particles with the smallest surface on the SEM image were selected in the obtained image of 200 $\mu$m X 200 $\mu$m size.

The longest axis length in each selected sulfur-carbon composite was measured and their average was calculated, and the result of calculation according to the following Equation 2A is shown in the following Table 8.

[Equation 2A]

$$X_L/X_S \leq 15$$

In the above Equation 2A,

$X_L$ is the average value of longest line segment lengths of the five sulfur-carbon composite particles with the biggest surface in the top view SEM image of the positive electrode active material layer, and $X_S$ is the average value of longest line segment lengths of the five sulfur-carbon composite particles with the smallest surface in the top view SEM image of the positive electrode active material layer.

$X_A$ is the average value of longest line segment lengths of the sulfur-carbon composite particles with a surface in the top view SEM image of the positive electrode active material layer which can be determined similar to $X_S$ with the difference that all particles are included in $X_A$. The $X_A$ value may be used in the following equation:

[Equation 2B]

$$X_L/X_A \leq 2.$$

Wherein the inventive examples (Example 1) fulfills the requirement, whereas the Comparative Example 1 does not fulfill the requirement.

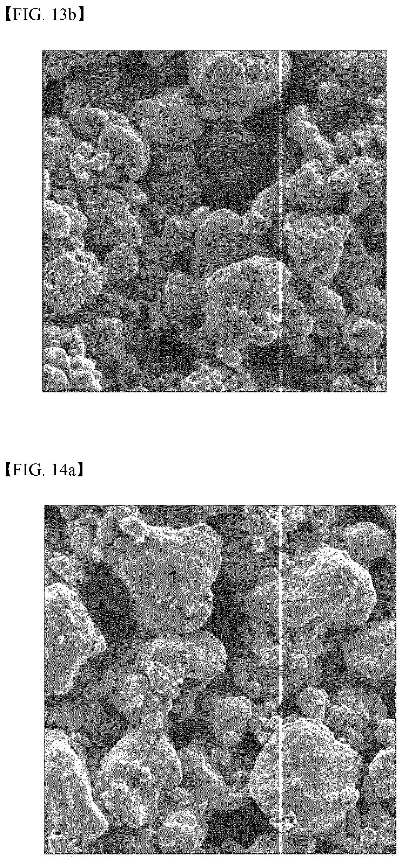

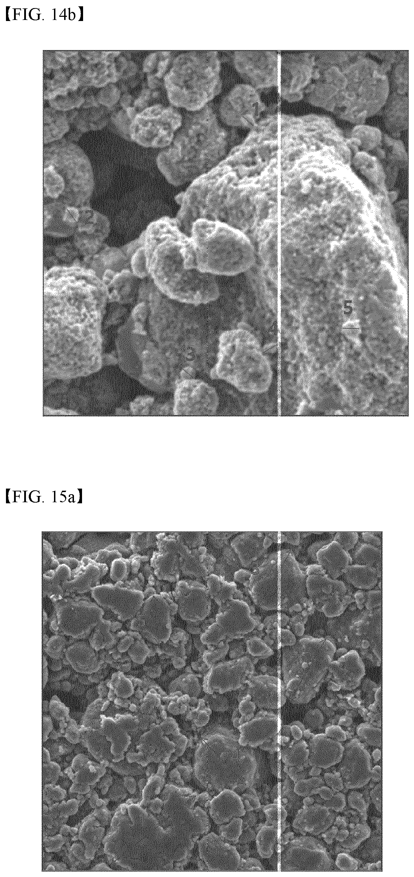

Each of FIGS. 13a and 13b shows the SEM image obtained from the positive electrode of Example 1, and in FIG. 13a, the longest line segment of the selected five sulfur-carbon composite particles with the biggest and smallest surfaces is indicated. For verification, in FIG. 13b shows the longest axis of five sulfur-carbon composite particles with a very small surface is indicated. Each of FIGS. 14a and 14b shows the SEM image obtained from the positive electrode of Comparative example 1, and in FIG. 14a, the longest line segment of the selected five sulfur-carbon composite particles with the biggest and smallest surfaces is indicated. For verification, FIG. 14b shows the longest line segment of five sulfur-carbon composite particles with a very small surface.

In this instance, it was confirmed that a particle having the longest line segment length of less than 1 $\mu$m in each SEM image was not a sulfur-loaded porous carbon material, i.e., a sulfur-carbon composite, and thus was not selected.

[Table 8]

| | $X_L/X_S$ | Whether or not Equation 2A is satisfied (True/Fail) |
|---|---|---|
| Example 1 | 3.5 | True |
| Comparative example 1 | 20.8 | Fail |

Evaluation example 2

After a lithium-sulfur battery was manufactured using the positive electrode, to evaluate a change in whether or not Equation 2 is satisfied by the repeated charge and discharge, the following experiment was performed.

First, the lithium-sulfur battery was manufactured as follows.

The lithium-sulfur battery was manufactured by placing the positive electrode manufactured using the sulfur-carbon composite of Comparative example 1 and a negative electrode with a separator interposed between the positive electrode and the negative electrode to make an electrode assembly, receiving the electrode assembly in a pouch type case and injecting an electrolyte solution. For the negative electrode, a 35 $\mu$m thick lithium metal foil was used. For the separator, a 16 $\mu$m thick porous polyethylenewas used. The electrolyte solution was prepared by adding 3 wt% of $LiNO_3$ and 1M $LiPF_6$ to a mixed organic solvent of 2-methyl furan and dimethoxyethane (33/77 volume ratio). A pouch cell including the positive electrode and the negative electrode manufactured as described above was fabricated. In each battery, El/S was controlled to 3.1 g/g condition.

Each lithium-sulfur battery manufactured as described above was discharged at 0.5C in a CC mode at 25°C up to 1.8 V and charged by a constant current of 0.3C up to 2.5 V, and discharging and charging was repeatedly performed at 1.0C for 200 cycles. In this instance, it was confirmed that the discharge capacity was maintained at 80% or more based on the initial capacity 100% using a charge and discharge tester.

After the last charge, the lithium-sulfur battery at SOC 75% was disassembled in a glove box under an Ar atmosphere, and the positive electrode was separated. The surface of the separated positive electrode was washed using DME and dried, and whether or not Equation 2 is satisfied was evaluated by the same method as Evaluation example 1.

Each of FIGS. 15a and 15b shows the SEM image obtained as described above, and in FIG. 15a, the longest line segment of the five sulfur-carbon composite particles with the biggest surface in the SEM image is indicated, and in FIG. 15b, the longest line segments of the five sulfur-carbon composite particles with the smallest surface in the SEM image is indicated. The result of the calculation according to the following Equation 2A is shown in the following Table 9.

[Table 9]

| (Evaluation after battery disassembly) | $X_L/X_S$ | Whether or not Equation 2 is satisfied (True/Fail) |
|---|---|---|
| Comparative example 1 | 23.2 | Fail |

As can be seen from the above Tables A and B, it was confirmed that the positive electrode manufactured using the sulfur-carbon composite of Comparative example 1 did not satisfy Equation 2A immediately after the manufacture and after the repeated charge and discharge of the battery using the same.

Through the follow-up experiment, it was confirmed that the lithium-sulfur battery using the positive electrode failing to satisfy Equation 2A was poor in terms of capacity, discharging density and high speed output performance of the battery, and presumably, it results from low reactivity due to non-uniform distribution of sulfur (S) in the positive electrode.

**Claims**

1. A positive electrode active material for a lithium-sulfur battery, comprising:

   a sulfur-carbon composite,
   wherein

      - the sulfur-carbon composite comprises a porous carbon material and a sulfur-based material,
      - the sulfur-based material is located on at least a part of the surface of the porous carbon material,

   wherein the sulfur-based material comprises at least one of sulfur ($S_8$) or a sulfur compound,
   wherein the porous carbon material has a broadness factor (BF) of 1 to 6, wherein the broadness factor is the ratio the particle size $D_{90}$ to the particle size $D_{10}$ of the porous carbon material determined as set forth in the description; and
   a sum of particle size $D_{10}$ and particle size $D_{90}$ of the porous carbon material determined as set forth in the description is 50 $\mu$m or more and 60 $\mu$m or less.

2. The positive electrode active material for the lithium-sulfur battery according to claim 1, wherein the sulfur-based material comprises at least one selected from the group consisting of a disulfide compound, preferably at least one selected from the group consisting of inorganic sulfur ($S_8$), $Li_2S_n$ ($n\geq1$); an organic sulfur compound, especially 2,5-dimercapto-1,3,4-thiadiazole or 1,3,5-trithiocyanuic acid; and a carbon-sulfur polymer (($C_2S_x)_n$, x=2.5 to 50, n$\geq$2).

3. The positive electrode active material for the lithium-sulfur battery according to any of the preceding claims, wherein the porous carbon material comprises at least one selected from the group consisting of activated carbon, carbon black, carbon nanotubes and graphene, preferably carbon nanotubes.

4. The positive electrode active material for the lithium-sulfur battery according to any of the preceding claims, wherein an amount of the sulfur (S) is 60 wt% or more and 90 wt% or less based on 100 wt% of the sulfur-carbon composite.

5. The positive electrode active material for the lithium-sulfur battery according to any of the preceding claims, wherein the porous carbon material has a $D_{50}$ particle size determined as set forth in the description of 20 $\mu$m or more and 40 $\mu$m or less.

6. The positive electrode active material for the lithium-sulfur battery according to any of the preceding claims, wherein the sulfur-carbon composite is obtainable by mixing the porous carbon material and the sulfur-based material and subsequentially heating the mixed porous carbon material and sulfur-based material at a temperature of 120°C or more.

7. A positive electrode for a lithium-sulfur battery, comprising:

a current collector and a positive electrode active material layer on at least one surface of the current collector, wherein the positive electrode active material layer comprises the positive electrode active material for the lithium-sulfur battery according to any one of claims 1 to 7, and

wherein an amount of the sulfur (S) is 60 wt% or more and 90 wt% or less based on 100 wt% of the positive electrode active material layer.

8.  The positive electrode for the lithium-sulfur battery according to claim 8, wherein an average tortuosity value of the positive electrode active material layer determined as set forth in the description is 1.7 or less.

9.  A lithium-sulfur battery, comprising:

an electrode assembly comprising a positive electrode, a negative electrode and a separator interposed between the positive electrode and the negative electrode; and an electrolyte,

wherein the positive electrode comprises the positive electrode active material according to any one of the preceding claims 1 to 7.

10.  The lithium-sulfur battery according to claim 9, wherein the weight ratio (El/S) of the total weight of the electrolyte to the total weight of the sulfur (S) in the electrode assembly is 3.5 or less.

**Patentansprüche**

1.  Positivelektrodenaktivmaterial für eine Lithium-Schwefel-Batterie, umfassend:

einen Schwefel-Kohlenstoff-Verbundstoff, wobei

- der Schwefel-Kohlenstoff- Verbundstoff ein poröses Kohlenstoffmaterial und ein Material auf Schwefelbasis umfasst,
- das Material auf Schwefelbasis sich auf mindestens einem Teil der Oberfläche des porösen Kohlenstoffmaterials befindet,

wobei das Material auf Schwefelbasis mindestens eines von Schwefel ($S_8$) oder einer Schwefelverbindung umfasst,

wobei das poröse Kohlenstoffmaterial einen Breitenfaktor (BF) von 1 bis 6 aufweist, wobei der Breitenfaktor das Verhältnis der Partikelgröße $D_{90}$ zu der Partikelgröße $D_{10}$ des porösen Kohlenstoffmaterials ist, bestimmt wie in der Beschreibung dargelegt; und

eine Summe der Partikelgröße $D_{10}$ und der Partikelgröße $D_{90}$ des porösen Kohlenstoffmaterials, bestimmt wie in der Beschreibung dargelegt, 50 $\mu$m oder mehr und 60 oder weniger beträgt.

2.  Positivelektrodenaktivmaterial für die Lithium-Schwefel-Batterie nach Anspruch 1, wobei das Material auf Schwefelbasis mindestens eines ausgewählt aus der Gruppe bestehend aus einer Disulfidverbindung, vorzugsweise mindestens eines ausgewählt aus der Gruppe bestehend aus anorganischem Schwefel ($S_8$), $Li_2S_n$ ($n \geq 1$); einer organischen Schwefelverbindung, insbesondere 2,5-Dimercapto-1,3,4-thiadiazol oder 1,3,5-Trithiocyansäure; und einem Kohlenstoff-Schwefel-Polymer (($C_2S_x)_n$, x=2,5 bis 50, n $\geq$ 2) umfasst.

3.  Positivelektrodenaktivmaterial für die Lithium-Schwefel-Batterie nach einem der vorstehenden Ansprüche, wobei das poröse Kohlenstoffmaterial mindestens eines ausgewählt aus der Gruppe bestehend aus Aktivkohle, Ruß, Kohlenstoffnanoröhren und Graphen, vorzugsweise Kohlenstoffnanoröhren, umfasst.

4.  Positivelektrodenaktivmaterial für die Lithium-Schwefel-Batterie nach einem der vorstehenden Ansprüche, wobei eine Menge des Schwefels (S) 60 Gew.-% oder mehr und 90 Gew.-% oder weniger, bezogen auf 100 Gew.-% des Schwefel-Kohlenstoff-Verbundstoffs, beträgt.

5.  Positivelektrodenaktivmaterial für die Lithium-Schwefel-Batterie nach einem der vorstehenden Ansprüche, wobei das poröse Kohlenstoffmaterial eine $D_{50}$-Partikelgröße, bestimmt wie in der Beschreibung dargelegt, von 20 $\mu$m oder mehr und 40 $\mu$m oder weniger aufweist.

**6.** Positivelektrodenaktivmaterial für die Lithium-Schwefel-Batterie nach einem der vorstehenden Ansprüche, wobei der Schwefel-Kohlenstoff- Verbundstoff durch Mischen des porösen Kohlenstoffmaterials und des Materials auf Schwefelbasis und subsequentielles Erhitzen des gemischten porösen Kohlenstoffmaterials und Materials auf Schwefelbasis bei einer Temperatur von 120 °C oder mehr erhältlich ist.

**7.** Positivelektrode für eine Lithium-Schwefel-Batterie, umfassend:

einen Stromabnehmer und eine Positivelektrodenaktivmaterialschicht auf mindestens einer Oberfläche des Stromabnehmers,
wobei die Positivelektrodenaktivmaterialschicht das Positivelektrodenaktivmaterial für die Lithium-Schwefel-Batterie nach einem der Ansprüche 1 bis 7 umfasst, und
wobei eine Menge des Schwefels (S) 60 Gew.-% oder mehr und 90 Gew.-% oder weniger, bezogen auf 100 Gew.-% der Positivelektrodenaktivmaterialschicht, beträgt.

**8.** Positivelektrode für die Lithium-Schwefel-Batterie nach Anspruch 8, wobei ein durchschnittlicher Tortuositätswert der Positivelektrodenaktivmaterialschicht, bestimmt wie in der Beschreibung dargelegt, 1,7 oder weniger beträgt.

**9.** Lithium-Schwefel-Batterie, umfassend:

eine Elektrodenanordnung, umfassend eine Positivelektrode, eine Negativelektrode und einen Separator, der zwischen der Positivelektrode und der Negativelektrode angeordnet ist; und einen Elektrolyten,
wobei die Positivelektrode das Positivelektrodenaktivmaterial nach einem der vorstehenden Ansprüche 1 bis 7 umfasst.

**10.** Lithium-Schwefel-Batterie nach Anspruch 9, wobei das Gewichtsverhältnis (El/S) des Gesamtgewichts des Elektrolyten zu dem Gesamtgewicht des Schwefels (S) in der Elektrodenanordnung 3,5 oder weniger beträgt.

**Revendications**

**1.** Matériau actif d'électrode positive pour une batterie au lithium-soufre, comprenant :

un composite de soufre-carbone,
dans lequel

- le composite de soufre-carbone comprend un matériau de carbone poreux et un matériau à base de soufre,
- le matériau à base de soufre est situé sur au moins une partie de la surface du matériau de carbone poreux,

dans lequel le matériau à base de soufre comprend soit un soufre ($S_8$), soit un composé de soufre,
dans lequel le matériau de carbone poreux a un facteur de largeur (BF) de 1 à 6, dans lequel le facteur de largeur est le rapport de la taille de particule $D_{90}$ à la taille de particule $D_{10}$ du matériau de carbone poreux, déterminé comme décrit dans la description ; et
une somme de la taille de particule $D_{10}$ et de la taille de particule $D_{90}$ du matériau de carbone poreux, déterminée comme décrit dans la description est 50 $\mu$m ou plus et 60 $\mu$m ou moins.

**2.** Matériau actif d'électrode positive pour la batterie au lithium-soufre selon la revendication 1, dans lequel le matériau à base de soufre comprend un ou plusieurs éléments sélectionnés dans le groupe constitué d'un composé de disulfure, de préférence un ou plusieurs éléments sélectionnés dans le groupe constitué de soufre inorganique ($S_8$), $Li_2S_n$ ($n\geq1$) ; un composé de soufre organique, en particulier 2,5-dimercapto-1,3,4-thiadiazole ou acide 1,3,5-trithiocyanurique ; et un polymère de carbone-soufre (($C_2S_x)_n$, x=2,5 à 50, n$\geq$2).

**3.** Matériau actif d'électrode positive pour la batterie au lithium-soufre selon l'une quelconque des revendications précédentes, dans lequel le matériau de carbone poreux comprend un ou plusieurs éléments sélectionnés dans le groupe constitué de charbon actif, noir de carbone, nanotubes de carbone et graphène, de préférence des nanotubes de carbone.

**4.** Matériau actif d'électrode positive pour la batterie au lithium-soufre selon l'une quelconque des revendications précédentes, dans lequel une quantité du soufre (S) est 60 % en poids ou plus et 90 % en poids ou moins sur la base de 100 % en poids du composite de soufre-carbone.

5. Matériau actif d'électrode positive pour la batterie au lithium-soufre selon l'une quelconque des revendications précédentes, dans lequel le matériau de carbone poreux a une taille de particule $D_{50}$, déterminée comme décrit dans la description, de 20 $\mu$m ou plus et 40 $\mu$m ou moins.

6. Matériau actif d'électrode positive pour la batterie au lithium-soufre selon l'une quelconque des revendications précédentes, dans lequel le composite de soufre-carbone peut être obtenu en mélangeant le matériau de carbone poreux et le matériau à base de soufre et en chauffant ensuite le matériau de carbone poreux et le matériau à base de soufre mélangés à une température de 120°C ou plus.

7. Électrode positive pour une batterie au lithium-soufre, comprenant :

un collecteur de courant et une couche de matériau actif d'électrode positive sur au moins une surface du collecteur de courant,
dans lequel la couche de matériau actif d'électrode positive comprend le matériau actif d'électrode positive pour la batterie au lithium-soufre selon l'une quelconque des revendications 1 à 7, et
dans lequel une quantité du soufre (S) est 60 % en poids ou plus et 90 % en poids ou moins sur la base de 100 % en poids de la couche de matériau actif d'électrode positive.

8. Électrode positive pour la batterie au lithium-soufre selon la revendication 8, dans lequel une valeur de tortuosité moyenne de la couche de matériau actif d'électrode positive, déterminée comme décrit dans la description, est 1,7 ou moins.

9. Batterie au lithium-soufre, comprenant :

un ensemble électrode comprenant une électrode positive, une électrode négative et un séparateur interposé entre l'électrode positive et l'électrode négative ; et un électrolyte,
dans lequel l'électrode positive comprend le matériau actif d'électrode positive selon l'une quelconque des revendications précédentes 1 à 7.

10. Batterie au lithium-soufre selon la revendication 9, dans laquelle le rapport en poids (El/S) du poids total de l'électrolyte au poids total du soufre (S) dans l'ensemble électrode est 3,5 ou moins.

【FIG. 1】

【FIG. 2】

【FIG. 3】

【FIG. 4】

【FIG. 5】

【FIG. 6a】

【FIG. 6b】

【FIG. 7a】

【FIG. 7b】

【FIG. 8】

【FIG. 9】

【FIG. 10】

【FIG. 11】

【FIG. 12】

【FIG. 13a】

【FIG. 13b】

【FIG. 14a】

【FIG. 14b】

【FIG. 15a】

【FIG. 15b】

【FIG. 16a】

【FIG. 16b】

**REFERENCES CITED IN THE DESCRIPTION**

**Patent documents cited in the description**

- KR 1020220159965
- KR 1020220183586
- KR 1020220183771
- KR KOREAN
- KR 1020220185613
- KR 1020230063394
- KR 1020230070299
- KR 1020230073163
- KR 1020230075765
- EP 23196130 A
- KR 1020230119938
- US 18244083 B
- EP 3667779 A2
- KR 20200050583 A

**Non-patent literature cited in the description**

- **NING et al.** *Journal of Power Sources*, 2014, vol. 269 (9), 111-116